# EUROPEAN PATENT SPECIFICATION

(11) **EP 4 619 166 B1**
(45) Date of publication and mention of the grant of the patent: **21.10.2026**
(21) Application number: 23809185.4
(22) Date of filing: 17.11.2023
(51) Int. Cl.: B05B 11/02, A47G 19/18, B05B 11/10, B05B 11/00

(54) **DISPENSER**
SPENDER
DISTRIBUTEUR

(30) Priority: 18.11.2022 US 202263384390 P
(43) Date of publication of application: 24.09.2025
(73) Proprietor: ASEPT INTERNATIONAL AB, 226 60 Lund (SE)
(72) Inventor: HELLZÉN, Nils Anders, 302 76 Halmstad (SE); RAYBURN, John, Brookfield, Wisconsin 53045 (US)
(74) Representative: Zacco Sweden AB
(86) International application number: PCT/EP2023/082220
(87) International publication number: WO 2024/105240

(56) References cited:
- WO-A1-2013/084203
- US-A- 5 738 067
- US-A1- 2009 140 011
- US-A1- 2019 283 955
- US-B2- 8 818 500

## Description

### Technical field

The present disclosure relates to a handheld dispenser for manual dispensing of food product, e.g. sauce, mayonnaise, ketchup, mustard, topping, etc., in fluid form. More specifically, the disclosure relates to a handheld dispenser for manual dispensing of food product as defined in the introductory parts of the independent claim.

### Background art

A problem with the solutions of the prior art of using different kinds of dispensers to dispense food product in fluid form, such as sauce, ketchup, mustard, condiment or the like, manually by hand for delivering the food product to a consumer, e.g. in a receptacle and/or directly onto some type of edible product, such as a hamburger or the like, is that the handling of those dispensers are cumbersome as such hitherto known dispensers are either a squeezable plastic bottle filled with food product and having a detachable cap with a spout, similar to a plastic bottle of ketchup and/or mustard, e.g. a FIFO-bottle^{™}, or a standalone countertop-type of dispenser with a container filled with food product to form a vertical stand with an opening facing upwards and having a pump device detachably attached on top of the bottle with one or more springs to bias a piston with a tube or other means to be in fluid communication with the food product inside the container and a spout for dispense of food product out of the container and via the spout to the consumer, see e.g. WO 2020/039343 A1, to pump food product from the container to be dispensed out via a spout. These prior art dispensers are only possible to store vertically with their outlets arranged as the upmost part or upwards pointing part. Moreover, solutions of the prior art suffer from low or even bad cleanability not fulfilling the hygiene requirements within the food industry or at least are very difficult to clean sufficiently after and before use and refilling. Furthermore, solutions of the prior art only provide a limited fixed amount for each portion being dispensed. Solutions of prior art are also not suitable for dispensing food product containing particulates of food product, such as berries, spices or the like. Examples of manually operated dispensers with containers comprising pistons are disclosed in US 2019/283955 A1 and US 2009/140011 A1.

There is thus a need for an improved handheld dispenser for manual dispensing of food product in fluid form.

### Summary

It is an object of the present disclosure to mitigate, alleviate or eliminate one or more of the above-identified deficiencies and disadvantages in the prior art and solve at least the above-mentioned problem/-s. According to a first aspect there is provided a handheld dispenser for manual dispensing of food product, e.g. sauce, mayonnaise, ketchup, mustard, topping, etc., in fluid form, comprising a container made of food-grade material configured to be filled with food product to airtight contain food product and to enable food product to be discharged out of a container outlet and to be refilled with food product when emptied of food product and comprises two ends, a first end opposite a second end, an inner piston configured to be detachably arranged inside the container and be slidable between a start position at the second container end after the container is filled with food product and be an end lid airtight closing the second container end after fill/refill and a final position bottoming at the first container end to close the container outlet when the container is emptied of food product, an elongated housing configured to be securely held in one hand and be detachably attached with a first end to the first container end, the housing comprising a second end arranged opposite the first end with an opening forming a mouth for a discharge valve nozzle enabling discharge of food product and a handle movably attached to the outside of the housing and to pressure means configured to be partly arranged inside the housing through an oblong slot in the housing, a pump chamber being a hose member made of flexible material and configured to be arranged inside the housing and the pressure means and be airtight connectable to a first end of a first check valve and the first container end to enable food product to flow from the container into and through the first check valve and the hose member when the hose member is compressed by manually pushing the handle towards the housing moving the pressure means towards the hose member to compress the hose member to dispense food product through a second check valve and finally out of the discharge valve nozzle, characterized in that the container is formed as a hard shell and/or enclosure with a smooth and/or level and/or even and/or polished inside surface and that the first and the second container end are open ends, and that the second container end has an opening size or area or diameter being substantially the same or the same as the inner cross-sectional size or area or diameter of the second container end, and that the first container end has an opening size or area or diameter being smaller than the opening size or area or diameter and the inner cross-sectional size or area or diameter of the container at the second container end.

This provides an easily cleaned and operated handheld dispenser with a more efficient emptying of food product.

According to some aspects, the inner cross-sectional size or area or diameter of the second container end is larger than the inner cross-sectional size or area or diameter at the first container end at a position just before the inner cross-sectional size or area or diameter of the first container end starts decreasing and transcending towards and into the container outlet at the first container end.

This provides an improved and more efficient emptying of food product.

According to some aspects, the container is made of food-grade, transparent material, preferably plastic material.

This provides an easier optical inspection of the container in regard of need of refill of food product.

According to some aspects, the first container end comprises the container outlet being an opening formed by an inner upstanding circumferential edge or flange protruding axially outwards from the first container end.

This provides an improved sealing and more secure assembly of the container, the hose member and the first check valve into the dispenser.

According to some aspects, the first check valve is configured to be separate and detachable from the hose member.

This provides an easier cleaning of the handheld dispenser when disassembled and a more robust operation during dispensing when assembled.

According to some aspects, the second check valve is configured to be an integral part of or integrated in the second end of the hose member.

This provides an easier cleaning of the handheld dispenser when disassembled and reduces the number of parts making up the handheld dispenser, thereby incurring less effort when handling the different parts of the handheld dispenser before assembly, during assembly and disassembly and after disassembly.

According to some aspects, the first container end comprises an inner thread configured to be detachably threaded onto outer threads on the first end of the housing when detachably assembling the container onto the housing.

This simplifies the disassembly and assembly of the handheld dispenser.

According to some aspects, the second container end has an outer cross-sectional size or area or diameter and the first container end has an end section with an outer cross-sectional size or area or diameter, wherein the outer cross-sectional size or area or diameter of the first container end is about the same size or has exactly the same size or is larger than the outer cross-sectional size or area or diameter of the second container end.

This facilitates gripping and threading when assembling and disassembling the different parts of the handheld dispenser.

According to some aspects, the container is configured as a nut with a through hole and inner threads at one end being the first container end and a first integrated tube portion being the container outlet protruding away from the second container end towards the inner threads in alignment with the through hole and a second integrated tube portion opposite and protruding in a direction opposite the container outlet in alignment with the through hole and the container outlet and ending by forming the second container end to provide a cavity configured to receive and contain food product in the container.

This makes the handheld dispenser or device easier to handle when assembling and disassembling and when refilling the container with food product as a firmer and more secure grip of the different parts making up the handheld dispenser are achieved.

According to some aspects, the container forming the nut with the inner threads at the first container end is configured with the inner threads arranged on the inner surface of a third integrated tube portion arranged radially outwards of and in alignment with the container outlet, the third integrated tube portion protruding away from the second container end in parallel with the container outlet to form a circumferential grip at the first container end.

This makes the handheld dispenser or device easier to hold when assembling and disassembling and when refilling the container with food product.

According to some aspects, the container is configured with a decreasing inner cross-sectional size or area or diameter longitudinally from the second container end towards and to the first container end.

This makes the emptying of food product from the container more efficient and improves the sealing between piston and the inside of the container.

According to some aspects, the container is configured with an increasing wall thickness from the second container end towards and to the first container end.

This improves the sealing between piston and the inside of the container and makes the container and thereby the handheld dispenser more durable and stable while optimizing the amount of material used for making the container.

According to some aspects, the wall thickness increases radially inwards and along the inside of the container from the second container end to the first container end.

This improves the sealing between piston and the inside of the container and makes the container and thereby the handheld dispenser more durable and stable while optimizing the amount of material used for making the container.

According to some aspects, the container at least partly has an outer shape and/or surface configured to form a circumferential grip.

This makes the container and thereby the handheld dispenser or device easier to hold when assembling and disassembling and when refilling the container with food product.

According to some aspects, the container is closed by a detachable lid at the opposite end relative the movable and slidable piston after filling of product and before use.

This means that the lid is removable and enables a dug-like pump device to be detachably attached to replace the lid when the dispenser is to be used. This enables storing a container after being filled with product as an intermediate storage or buffering of product, e.g., in a cold space to increase the shelf-lift of the product, before use.

According to some aspects, the piston has one or more airing or ventilation through openings and/or valves made by one or more slits through a flexible membrane.

This enables ventilation and airing of the inner space of the container when the piston is moved inside the container towards the container outlet in that the slit is opened and let air out of the inner space of the container when the piston moves towards the outlet of the dispenser and closes when the piston does not move. When removing the piston from the container the slit is also able to open to make it easier to slide the piston out of the container.

According to some aspects, the container is configured with one or more holds adapted for detachable attachment of one or more lift assist manipulators or lift weight balancers.

This enables balancing out the weight of the dispenser during use while compensating for the varying weight of the dispenser, i.e., from a maximum weight when the container is full with product to a minimum weight when emptied of product, improving the ergonomics.

Hence, it is to be understood that the herein disclosed disclosure is not limited to the particular component parts of the device described or steps of the methods described since such device and method may vary. It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit/device" or "the unit/device" may include several units and/or devices, and the like. Furthermore, the words "comprising", "including", "containing" and similar wordings does not exclude other elements or steps. According to the disclosure, entities or parts or details having reference numerals with apostrophe are meant to comprise and/or include at least the same functions as the entities having reference numerals without apostrophe, i.e., each and every entity denoted with reference numerals having an apostrophe are at least functionally, or even in some embodiments structurally, interchangeable with each and every entity having reference numerals without an apostrophe. This means that entities having reference numerals with apostrophe are provided with either exactly the same features or very similar and equally usable feature or comprises at least one or more or all of the same features as the entities having reference numerals without apostrophe, which features could be structural and/or functional features.

Terminology -- The terms "standing vertical/horizontal" or "upstanding/laying" are to be interpreted as a relative positioning of entities in relation to the horizontal or vertical plane.

### Brief descriptions of the drawings

The above objects, as well as additional objects, features and advantages of the present disclosure, will be more fully appreciated by reference to the following illustrative and non-limiting detailed description of example aspects/embodiments of the present disclosure, when taken in conjunction with the accompanying drawings.
Figures 1 shows a handheld device, i.e. a dispenser full of food product in a side view with a pumping handle to the right according to an aspect of the present disclosure.
Figure 2 shows a position of the handheld dispenser of fig. 1 in another view from the side but turned 90° from right to left around its longitudinal axis showing the pumping handle in front of the dispenser.
Figure 3 shows a bottom view of the handheld dispenser of figs. 1 and 2, i.e. from below seen in parallel with the longitudinal axis of the handheld dispenser.
Figure 4 shows in perspective an exploded view of the handheld dispenser of figs. 1 - 3 to the left and of inner parts making up a pump device of the handheld dispenser to the right in a state when not yet filled with food product; after disassembly; before assembly; before cleaning of all parts making up the handheld dispenser after disassembly, or after cleaning of all parts making up the handheld dispenser state before assembly and an enlargement/cutout of an inner valve of the pump device in an upper part view for clarification.
Figure 5 shows a cross-sectional view from the side of the handheld dispenser of fig. 1 taken along line A-A in fig. 3 in a state fully filled with food product but not yet in operation.
Figure 6 shows a cross-sectional view from the side of the handheld dispenser of fig. 1 taken along line A-A in fig. 3 in a dispensing state, i.e. in operation.
Figure 7 shows a cross-sectional view from the side of the handheld dispenser of fig. 1 taken along line A-A in fig. 3 in a dispensing state, i.e. in operation.
Figure 8 shows an enlarged cross-sectional view of a container with a piston used in the handheld dispenser separately during different stages/states with the piston in an upper start position before or just when dispensing is starting and in a middle or intermediate position during dispensing and a lower or bottom position when dispensing of food product is ended as the container of the handheld dispenser now is emptied of food product according to an aspect of the present disclosure.
Figure 9 shows a cutout enlarged cross-sectional view from a similar viewing as in fig. 3, i.e., as seen along/in parallel with the longitudinal axis of the handheld dispenser during dispensing according to an aspect of the present disclosure.
Figure 10 shows in perspective a piston as shown in fig. 8 when disassembled from a container or before assembly into a container of the handheld dispenser according to an aspect of the present disclosure.
Figure 11 shows in perspective one member of movable pressure means used for pumping out food product via a dug-like manual pump system or device of the handheld dispenser according to an aspect of the present disclosure.
Figure 12 shows in perspective a handle used for manually - by one hand - pumping out food product by means of the pressure means in fig 11 and the handheld dispenser according to an aspect of the present disclosure.
Figure 13 shows in a cross-sectional view from the side - similar to a cross-section taken along line A-A in fig. 3 - a container of a handheld dispenser separately such as in fig. 8 but without an inner floating piston and empty of food product before the container is detachably attached to a pump system or device of the handheld dispenser to be filled or replenished with food product or after being disassembled from the pump system or device of the handheld dispenser after dispensing is finished and the container is emptied according to an aspect of the present disclosure.
Figure 14 shows a view in perspective of a housing configured to make up a pump system or device together with the detachable parts shown in figs. 1 to 7 and 9, 11 and 12 to enable a handheld dispenser to discharge food product according to an aspect of the present disclosure.

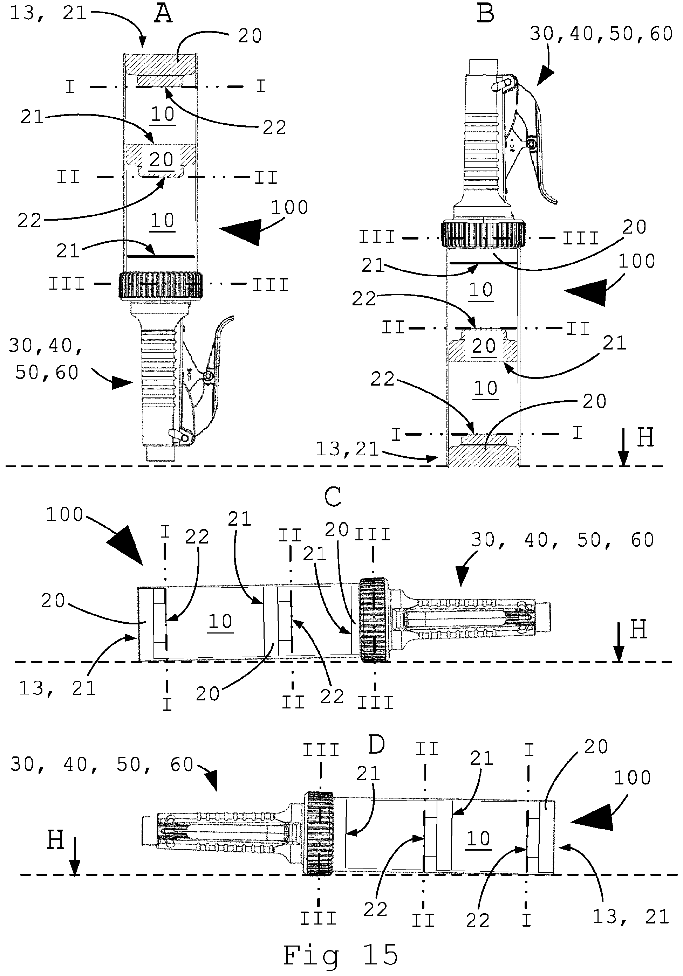

Figure 15 shows four different side views of the handheld dispenser, the top left view A shows the handheld dispenser before being filled or refilled with food product and before commencing dispensing thereof or during the dispensing or when the piston is removed after emptying the container from level III past levels II and I and before being taken out of the container and food product being filled therein, the top right view B shows the handheld dispenser when not in use, i.e. when stored with or without food product and with two different filling grades I and II, i.e. full and emptied to about half, before commencing dispensing thereof or after finishing the dispensing while upstanding, i.e. vertically orientated or when the piston is removed - after finished dispensing that have emptied the container - from level III past levels II and I and before being taken out of the container and food product being filled therein, the middle/centre view C and the bottom/lowest view D show the handheld dispenser in the same state as in views A and B but lying down relative a horizontal plane H according to an aspect of the present disclosure for temporary or intermediate storage.
Figure 16 shows a handheld device, i.e. a dispenser full of food product in a side view according to an aspect of the present disclosure.
Figure 17 shows the handheld device, i.e. the dispenser of fig. 17 full of food product in a cross-sectional view taken along line C in fig. 18.
Figure 18 shows a bottom view of the handheld dispenser of figs. 16 and 17, i.e. from below seen in parallel with the longitudinal axis of the handheld dispenser.
Figures 19 and 20 show perspective views of a container with a piston used in the handheld dispenser at the top end - see fig. 19 - and turned upside down in fig. 20 to show a separate but detachably attached lid or end cover when dispensing is to be started by use of a filled container or before the container is to be refilled with product before commencing dispensing or when a filled container is stored as an intermediate storage and preprepared for future dispensing by removal of the lid and instead attaching a pump device/system according to an aspect of the present disclosure.
Figures 21 and 22 show in perspective a detachable and separate piston as shown in figs. 16, 17 and 19 from two sides or ends - the right view in fig. 22 shows the same side of the piston as exposed in fig. 19 - when disassembled from a container or before assembly into a container of the handheld dispenser according to an aspect of the present disclosure.
Figures 23 and 24 show in perspective a detachable and separate lid or end cover as shown in fig. 20 from two sides or ends - the right view in fig. 24 shows the same side of the lid/end cover as exposed in fig. 20 - when disassembled from a container or before assembly into a container of the handheld dispenser according to an aspect of the present disclosure.

### Detailed description

The present disclosure will now be described with reference to the accompanying drawings 1 to 24, in which preferred example aspects of the disclosure are shown. The disclosure may, however, be embodied in other forms and should not be construed as limited to the herein disclosed aspects. The disclosed aspects are provided to fully convey the scope of the disclosure to the skilled person. All the figures are highly schematic and not necessarily to scale, and they show only those parts which are necessary in order to elucidate the invention, other parts being omitted or merely suggested.

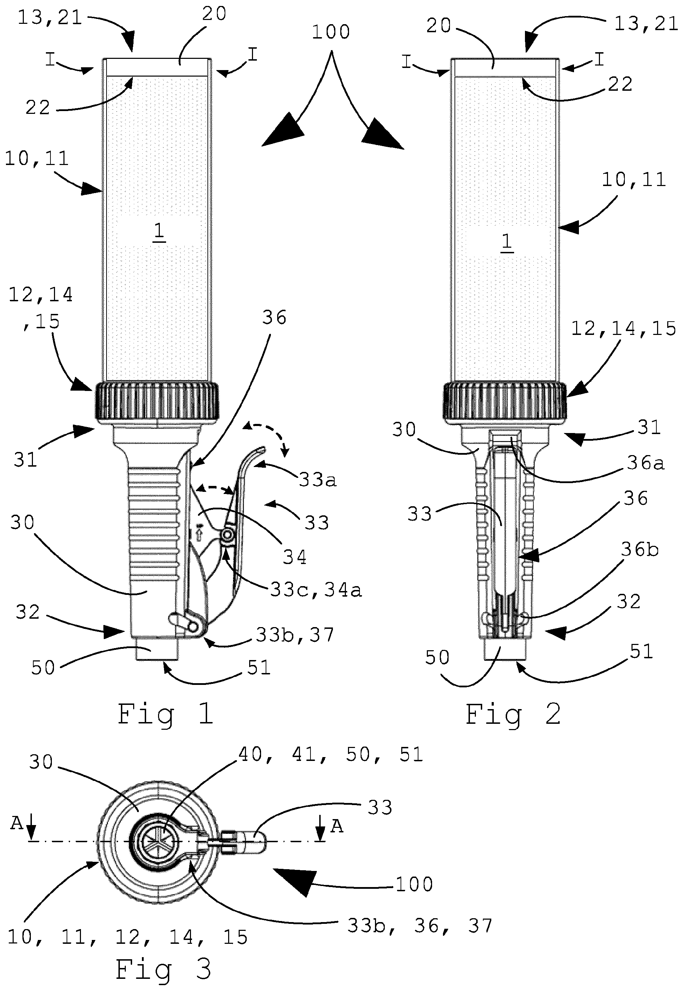

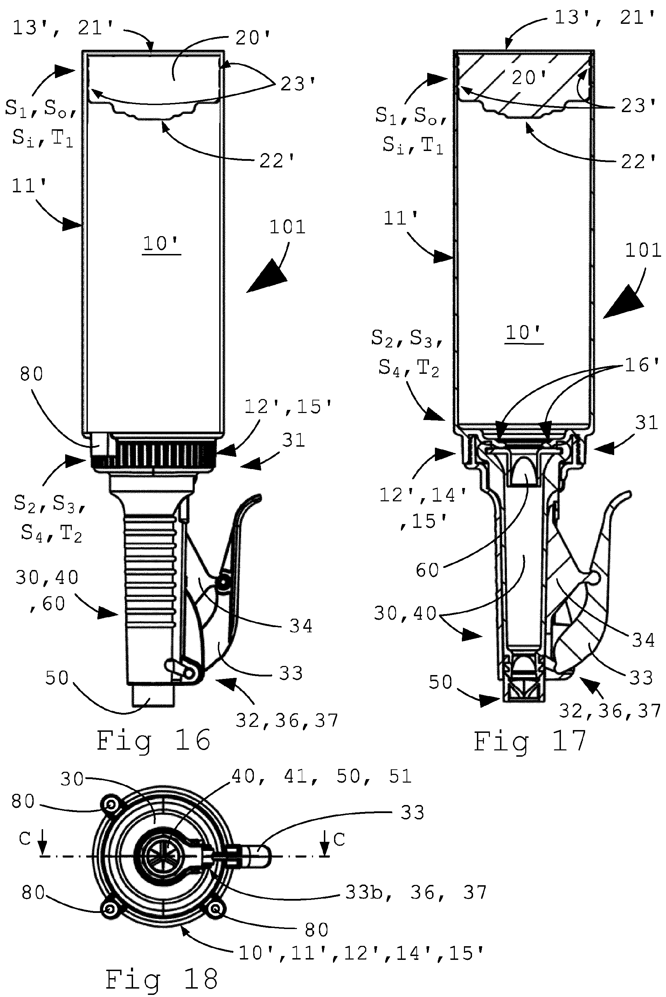

Figures 1 to 3 show the handheld dispenser 100 according to the disclosure in three different side views. In fig. 15, the handheld dispenser 100 is shown in four separate views A to D visualizing different orientations of the handheld dispenser, one different orientation in each view. These views A to D show the orientation of the handheld dispenser 100 relative a horizontal plane H but could be related to also a perpendicular vertical plane. These orientations of the handheld dispenser are also applicable in other embodiments as natural handling by an operator, such as the ones of the handheld dispenser 101 and its container 10' shown in figs. 16 to 20. Hence, this fig. 15 clearly shows the versatility of the handheld dispenser 100, 101 according to the disclosure as this handheld dispenser 100, 101 provides the ability to be stored lying down on a horizontal plane H, such as on a shelf in a cabinet- or bookcase-like storage, making the use of this handheld dispenser applicable in more environments and in very different layouts of food product dispensers compared to prior art dispensers that are only possible to store upstanding when not in use to not leak food product and as those usually are not easy to grip. In fig. 15, but also in figs. 1, 2, 4, and 16 to 18, the handheld dispenser 100, 101 is shown comprising a transparent container 10, 10'. The container 10, 10' is made at least partly of a transparent material, preferably plastic. The transparency of the material of the container 10, 10' is provided to enable a more fail-safe visual control of the amount of food product 1 packaged inside the container to more clearly be able to optically see the level of the food product 1 during dispensing and storage. The transparency of the container 10 is adapted to make the enclosure and sidewalls 11 of the part of the container 10 where the food product 1 is contained more visible, i.e. to provide good visual clarity, in that this container part 11 is made of transparent and/or clear material, preferably plastic, i.e. this part 11 of the container 10, 10' is not opaque. These designs, in particular the transparency of the container of the handheld dispenser are also applicable in other embodiments, such as the handheld dispenser 101 and its container 10' and enclosure 11' shown in figs. 16 to 20.

The container 10, 10' shown in figs. 1 to 8, 13, 15, and 16 to 18 is made of food-grade transparent material, i.e. clear material with good visual clarity, preferably plastic. The container 10, 10' is formed as a hard shell/enclosure 11, 11' and configured to be packaged or filled with the food product 1 to airtight contain the food product. The container 10, 10' is configured to enable the food product 1 to be dispensed out of the container and configured to be refilled with food product when dispensing is finished and the container is empty. The container 10, 10' is configured to airtight contain food product 1 until substantially all or all food product is dispensed out of the container and configured to be refilled with food product when the food product is emptied from the container.

The first aspect of this disclosure concerns the handheld device or dispenser 100 for manual dispensing of food product 1, e.g. sauce, mayonnaise, ketchup, mustard, topping, etc., in fluid form. The handheld dispenser 100 is made up of only eight detachable and easy cleanable parts 10, 20, 30, 40, 50 and 60. The handheld dispenser 100 is made up of only eight detachable and easy cleanable parts 10, 20, 30, 40, 50 and 60 being made of food-grade material. The numerals I to V and the corresponding dash-dotted lines in the figs. visualize different levels or positions of where dimensions of the parts making up the handheld dispenser 100 is defined and/or measured and how much food product 1 has been or not yet been dispensed out of the handheld dispenser. The second aspect or embodiment of this disclosure concerns the handheld device or dispenser 101 that includes at least the same above features as for the handheld device or dispenser 100 of the first aspect or embodiment.

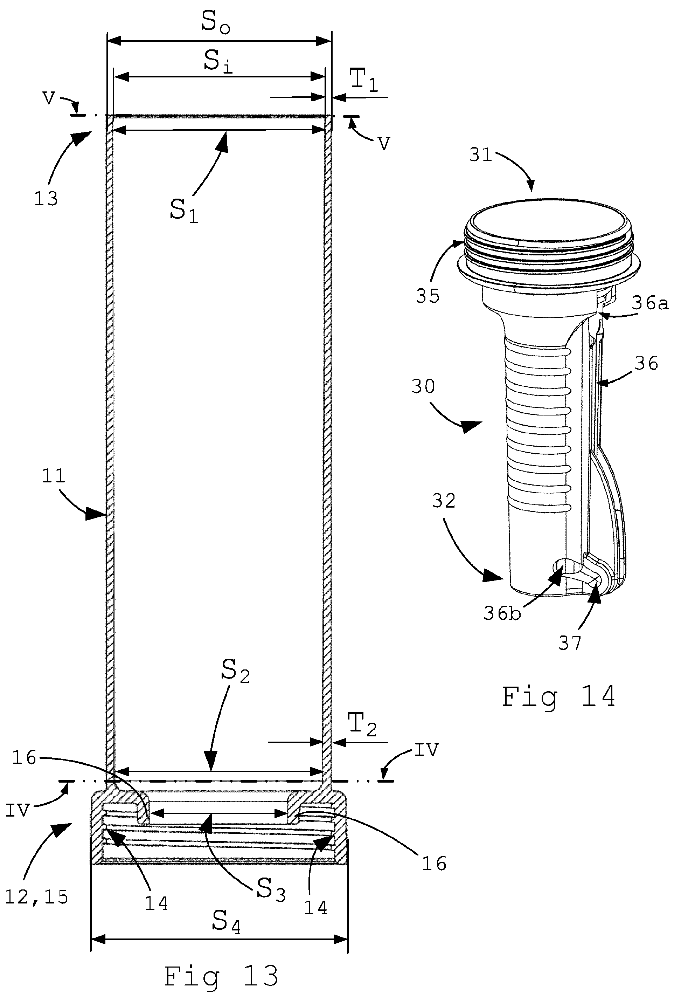

The handheld dispenser 100 comprises a container 10 made of food-grade, clear material configured to be filled with food product 1 to thereafter enable dispense of food product out of the container until the container is emptied and/or refilled/replenished with food product. The container 10 is configured to be made in one piece, see fig. 13. The container 10 is configured to be made in different sizes, e.g. different lengths and/or widths to be able to contain different amounts of food product 1 depending on need. After filling, the container 100 is configured to airtight contain food product 1 and to enable food product to be dispensed out of the container and configured to be refilled with food product when emptied of food product, i.e. when the container is either fully emptied or only partly emptied of food product 1. The container 10 comprises two open ends, a first end 12 and a second end 13 opposite the first end 12. In some aspects, the first container end 12 is configured to let out food product 1 from the container 10 for dispense thereof or let in food product 1 into the container to refill or replenish the container with food product when the container is at least partly emptied or fully emptied of food product. In some aspects, the second container end 13 is configured to let out food product 1 from the container 10 for dispense thereof or let in food product 1 into the container to refill or replenish the container 10 with food product when the container is at least partly emptied or fully emptied of food product. The second aspect or embodiment of this disclosure concerns the handheld device or dispenser 101 that includes at least the same former features as the handheld device or dispenser 100 of the first aspect or embodiment.

The handheld dispenser 100 also comprises an inner separate piston 20 configured to be detachably arranged inside the container 10. The piston 20 is slidable and/or "floating" between a start position I at the second end 13 of the container 10 after the container is filled with food product 1 and one or more intermediate positions II a final in an infinitely variable way, i.e. there is no predetermined intermediate positions, the only predetermined position is a position III where the piston 20 bottoms in the container as in an end position III at the first end 12 of the container when the container is emptied of food product. The inner piston 20 is configured to be movably arranged inside the container 10 to slide or float on the "surface" of the food product 1 from the first end or start position I at the second container end 13 after the container is filled or refilled with food product 1. The piston 20 also acts as an end lid that airtight closes the second container end 13 after fill/refill in the start position I and in the final position III when bottoming at the first container end 12 closing a container outlet 16 when the container 10 is emptied of food product 1. The second aspect or embodiment of this disclosure concerns the handheld device or dispenser 101 that includes at least a piston 20' with the same former features as the piston 20 of the handheld device or dispenser 100 of the first aspect or embodiment.

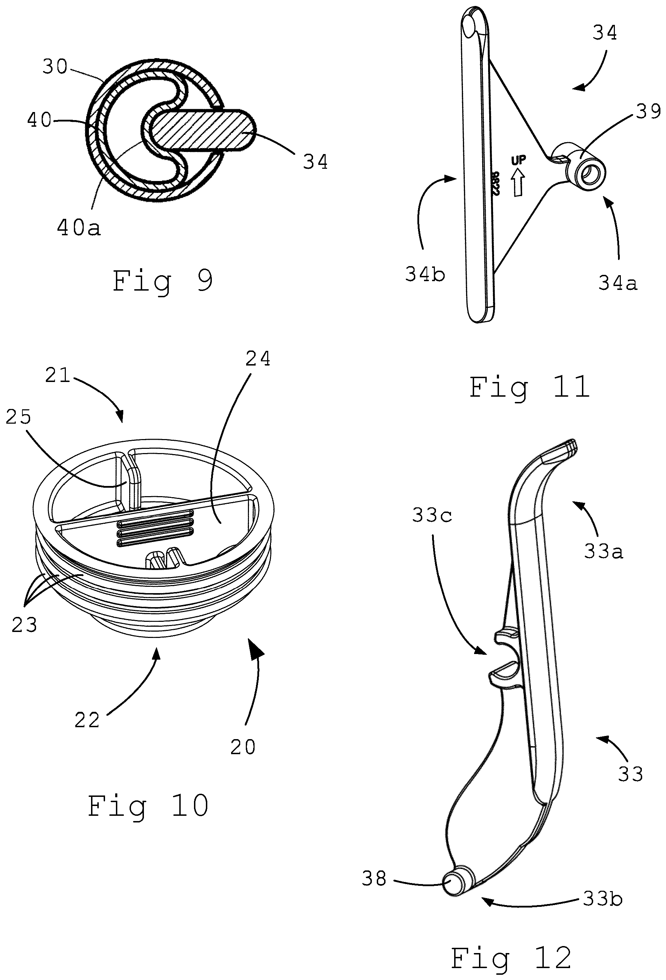

The container 10 comprising the floating piston 20 is configured to be detachably connected to an elongated housing 30 configured to be securely held in one hand and be detachably attached with a first end 31 to the first container end 12. The housing 30 is tube-like and configured to receive a tube-like pump chamber 40 being a hose member configured to work as a dug for pumping to dispense/discharge food product 1. The housing 30 comprises a second end 32 with an opening forming a mouth for receiving and guiding a discharge valve nozzle 50 that is configured to open up to enable dispense of food product 1. The housing 30 comprises a handle 33 with a free end 33a as a grip for a hand and a second end 33b movably attached to the outside of the housing and a pressure means 34 being partly arranged inside the housing through an oblong through slot 36 in the side wall of the housing. The slot 36 comprises an upper or first portion 36a being wider than the remaining slot 36. The slot 36 comprises a lower or second portion being wider than the remaining slot 36. The remaining of the slot 36 extends vertically along the housing 30 as an opening between the first slot portion 36a and the second slot portion 36b. The handle 33 is movably and detachably attached with its second end 33b via one or more pivots/pins 38 in a seat 37 on the outside of the housing 30, see at least figs. 1 to 7, 11, 12, 15, and 16 to 18 to work as a lever. The wideness or opening of the first and the second slot portions 36a, 36b are configured dimensionally to be able to let the pin/-s 38 through these two slot portions when assembling and disassembling the handle 33 onto and from the housing 30. The handle 33 and the pressure means 34 being a plunger are both movably connected to each other and the outside of the housing 30 and the slot 36. The plunger 34 comprises a first end 34a being pivotally and detachably attached with one or more pivots/pins 39 to a seat 33c on the handle 33. The plunger 34 comprises a second end 34b configured to engage the hose member 40 inside the housing 30 via the slot 36 after assembly of the plunger and the handle 33 to the housing after the hose member 40 is inserted into the housing. The pins 38 and 39 of the handle 33 and the plunger 34 extends in directions perpendicular to the extension planes of the handle and the plunger, respectively, see e.g. figs. 11, 12 and 16 to 18. In fig. 14, the handle 33 is shown with two edges or flanges to the right extending vertically and along a part of the housing 30, one flange or edge at either side of the orifice or opening of the slot 36.

The elongated housing 30 is configured to be securely held in/by one hand when being detachably attached with the first end 31 to the first container end 12. The housing 30 comprises the second end 32 arranged opposite the first end 31 with an opening forming a mouth for a discharge valve nozzle 50 enabling discharge of food product 1. The handle 33 is movably attached to the outside of the housing 30 and to the pressure means or plunger 34 configured to be partly arranged inside the housing through the oblong slot 36 in the housing,

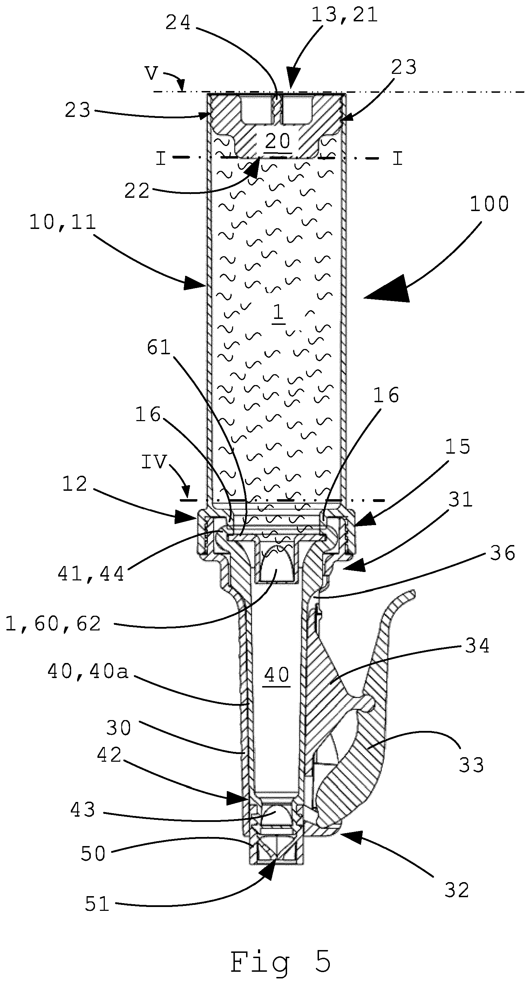

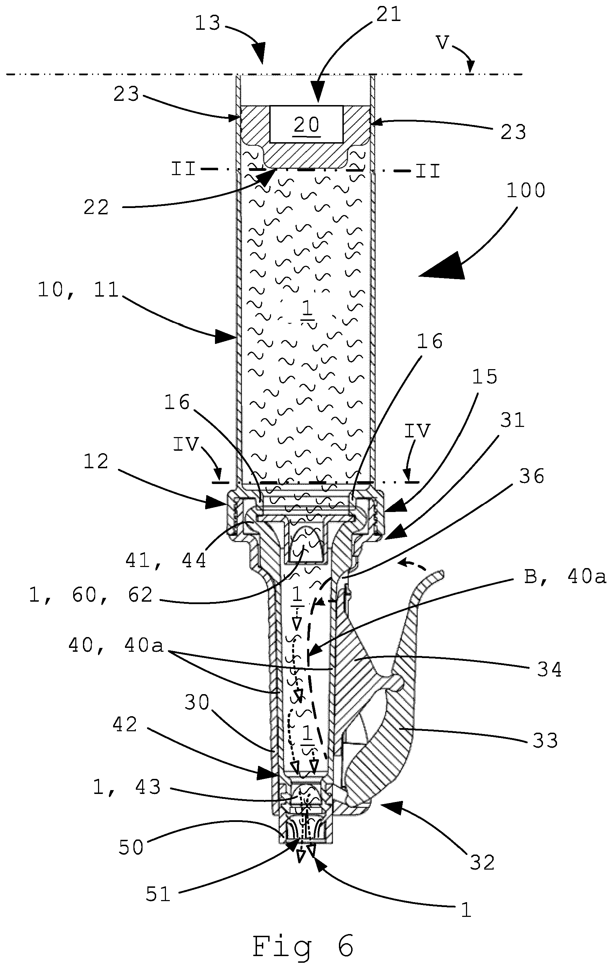

The hose member 40 works as a dug-like pump chamber made of flexible material and configured to be arranged inside the housing 30 between the inside of the housing and the plunger 34 operated by the handle 33. The hose member 40 is airtight and leak-proof connectable to the first container end 12 to enable food product 1 to flow from the container 10 into and through the hose member 40 without letting in air into the hose member at the same time. This is done when the hose member 40 is compressed by manually pushing the handle 33 towards the housing 30 moving the plunger 34 simultaneously towards the hose member to compress the hose member and pressing food product out through the discharge valve nozzle 50, see e.g. figs. 6 and 9, this dispensing is equally applicable to the dispenser 101. The dug-like pump chamber and hose member 40 is configured to be arranged inside the housing 30 and the plunger 34. The hose member 40 is configured to be airtight connectable to a first end 61 of a first check valve 60 and the first container end 12 to enable food product 1 to flow from the container 10 into and through the first check valve 60 and the hose member 40 when the hose member is compressed by manually pushing the handle 33 towards the housing 30 simultaneously moving the plunger 34 towards the hose member to compress the hose member to dispense food product through a second check valve 43 and finally out of the discharge valve nozzle 50. When the handle 33 is released after being pressed according to the dashed contour line B of fig. 6 and the shape in fig. 9, the malleable hose member 40 "springs back" to the shape shown with solid lines in figs. 5, 6 and 7 increasing its inner volume that create a suction pressure that "sucks" food product 1 from the container 10 into the pump chamber being the hose member and the inner volume of the hose member 40 is filled with food product 1, this is repeated until the container 10 is fully emptied of food product 1.

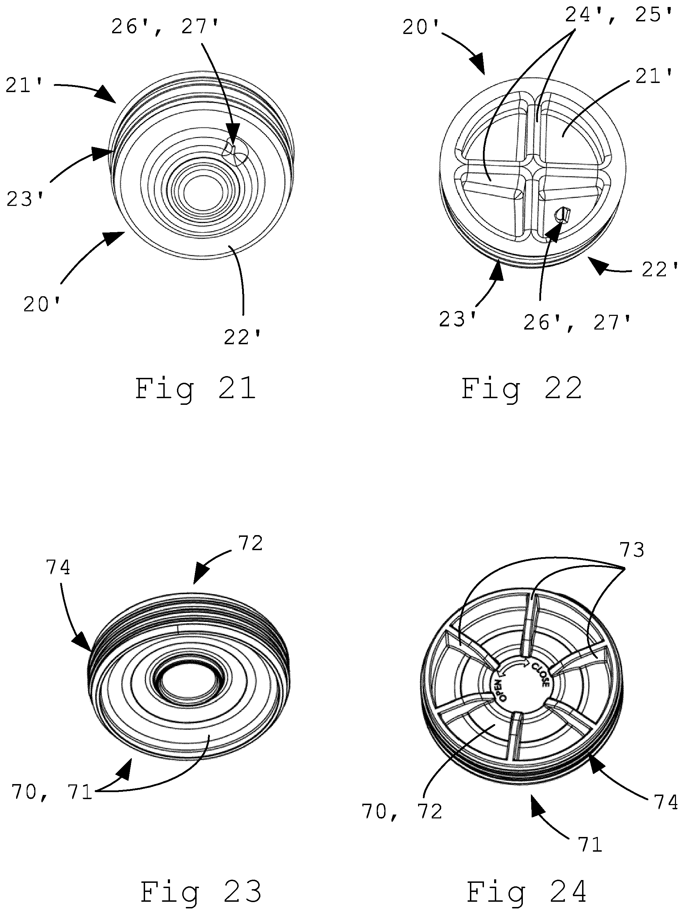

The container 10, 10' with the slidable and/or floating piston 20, 20' is shown in figs. 1, 2, 4 - 7, and 16 to 24. The container 10, 10' is formed as a hard shell/enclosure 11, 11' with a smooth and/or level and/or even inside surface and/or polished inner surface. The first and the second container end 12, 12', 13, 13' are open ends, i.e. the container 10, 10' is configured with a through hole or channel through its full length from one end to the other. The second container end 13, 13' is configured with an opening size or area or diameter S₁ being substantially the same or the same as the inner cross-sectional size or area or diameter Sᵢ of the second container end. The inner cross-sectional size or area or diameter Sᵢ of the second container end 13, 13' is larger than the inner cross-sectional area S₂ at/of the first container end 12, 12'. In some aspects, the inner cross-sectional size or area or diameter Sᵢ of the second container end 13, 13' is larger than the inner cross-sectional size or area or diameter S₂ at the first container end 12, 12' at a position IV (see figs. 5, 6, 7, and 13) just before the inner cross-sectional size or area or diameter S₂ of the first container end 12, 12' starts decreasing and transcending towards and into the container outlet 16, 16' at the first container end. The second aspect or embodiment of this disclosure concerns the handheld device or dispenser 101 that includes at least a container 10' with the same above features, i.e. T₁, T₂, S₁, S₂, S₃, S₄ as the container 10 of the handheld device or dispenser 100 of the first aspect or embodiment.

In some aspects, a first thickness T₁ being the thickness of the container wall/enclosure 11, 11' at the second container end 13, 13' is less than a second thickness T₂ being the thickness of the container wall/enclosure 11, 11' at the first container end 12, 12'.

The varying and decreasing inner measures, i.e. from the larger first inner size or inner area or inner diameter S₁ of the container 10 to the smaller second inner size or inner area or inner diameter S₂ of the container 10 provides an increased sealing effect for the piston 20 as it moves from the second container end 13 towards the first container end 12 due to the fact that the piston 20 and its sealing ribs 23 are pushed harder and tighter against the inside of the container 10 the closer the piston comes the first container end 12. The piston 20 is made of elastic and/or flexible material that provides the above effect. According to the disclosure, the same goes for the handheld device or dispenser 101 and its piston 20'.

The varying and increasing inner measures, i.e. from the thinner first container wall thickness T₁ at the second container end 13 to the thicker second thickness T₂ at the first container end 12 provides an increased sealing effect for the piston 20 as it moves from the second container end 13 towards the first container end 12 due to the fact that the piston 20 and its sealing ribs 23 are pushed harder and tighter against the inside of the container 10 the closer the piston comes the first container end 12. The piston 20 is made of elastic and/or flexible material that provides the above effect. According to the disclosure, the same goes for the handheld device or dispenser 101 and its piston 20'.

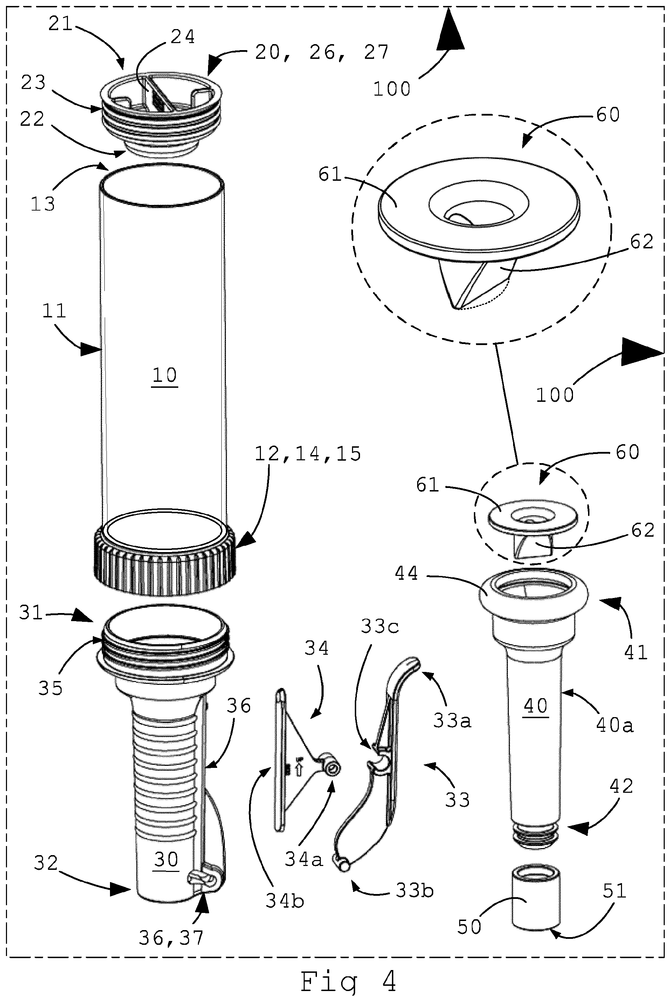

Figs. 4 to 7, and 17 show the second end 42 of the hose member 40 and the discharge valve nozzle 50 having complementary fitting means, i.e. the second hose member end 42 comprises one or more protruding ribs, preferably two ribs as shown, around its outer circumference that are inserted into one end of the discharge nozzle valve 50 by pressing until the protruding ribs of the second hose member end 42 fit or engage or snap into one or more outer grooves or indentations (preferably two grooves as shown) around and in the outer circumference of the discharge nozzle valve 50 in a secure and airtight and food product leak-proof way. This is done by making the inner pump chamber, i.e. the hollow hose member 40, and the discharge nozzle valve 50 of elastic and resilient and/or flexible material, such as silicone, to fit detachably together secure, leak-proof and airtight.

In figs. 4, 5, 6, and 7, a separate and second check valve 60 is shown and configured to be detachably disposed in an inlet portion 44 of the hose member 40. The separate check valve 60 comprises an attachment part 61 in the form of a first end being a circumferential plate or the like, which engages with an inner annular groove in the inlet portion 44 so that the attachment part 61 is fixedly/securely and airtight attached to the first hose member end 41. This secure and airtight connection and detachable attachment of the separate check valve 60 to the inlet portion 44 of the hose member 40 is further improved by the first container end 12 when the container 10 is detachably connected to the housing 30 in that the first container end 12 comprises an inner circumferential protruding flange or edge 16 extending towards the housing 30 and away from the container to engage and firmly press onto the inlet portion 44 as shown in figs. 5, 6 and 7 that in turn presses more tightly against the attachment part 61 forming the first end of the separate check valve in the form of a circumferential flange or flat plate extending in the radial direction of the housing 30, the hose member 40 and the container 10. The circumferential protruding or upstanding flange or edge 16 is configured to form the outlet of food product 1 from the container 10. As shown in figs. 4 - 7, this separate check valve 60 comprises a second end 62 formed as a neb that opens up when pressure outside the check valve 60 and the neb 62, i.e. in the pump chamber being the hose member 40 is lower than pressure inside the check valve 60 and its neb 62, i.e. inside the container 10. The pressure inside the hose member 40 is or becomes lower than the pressure inside the container 10 and the separate check valve 60 and its neb when the handle 33 is released after being pressed in as shown by the dashed contour line B in fig. 6. As shown in figs. 4 - 7, this separate check valve 60 comprises a second end 62 formed as a neb that opens up when pressure inside the check valve 60 and the neb 62, i.e. in the container 10 is higher than pressure outside the check valve 60 and the neb 62, i.e. inside the hose member 40 forming a pump chamber, hence, the pressure inside the hose member 40 is or becomes lower than the pressure inside the container 10 when the handle 33 is released after being pressed in as shown by the dashed contour line B in fig. 6. In some aspects, the first container end 12 comprises the container outlet 16 being an opening formed by an inner upstanding circumferential edge or flange 16 protruding axially away and/or outwards from the first 12 and the second container end 13. In some aspects, the first check valve 60 is configured to be a separate entity and detachable from the hose member 40. In some aspects, the second check valve 43 is configured to be an integral part of or integrated in the second end 42 of the hose member 40. According to the disclosure, the same goes for the handheld device or dispenser 101 and its pumping system.

In some aspects, the first container end 12 comprises an inner thread 14 configured to be detachably threaded onto outer threads 35 on the first end 31 of the housing 30 when detachably assembling the container 10 onto the housing. In some aspects, the first container end 12 comprises an outer circumferential grip in the form of outstanding or protruding ribs reducing the risk of losing the grip when manually threading by slipping with the hand/-s and/or fingers. In some embodiments, the grip 15, 15' is further improved by one or more protrusions 80.

In some aspects, the second container end 13 has an outer cross-sectional size or area or diameter Sₒ and the first container end 12 has an end section with an outer cross-sectional size or area or diameter S₄, wherein the outer cross-sectional size or area or diameter S₄ of the first container end 12 is about the same size or has exactly the same size or is larger than the outer cross-sectional size or area or diameter Sₒ of the second container end 13. This is beneficial when detachably threading the container 10 and the housing 30 together as the grip for the hand/-s and finger/-s and the force from the hand/-s are increased without increasing the effort in threading. This is achieved in that the torque for threading is provided by a longer or radial distance from the axis of rotation due to the larger outer size of the first container end 12 creating a longer torque arm, see figs. 4 - 8 and 13 - 15. This also provides a better grip of the container 10 to detachably thread it like a nut to the housing 30 when assembling the dispenser 10 or from the housing 30 when disassembling the container 10 and the housing 30. The first container end 12 has an opening size or area or diameter S₂, S₃ being smaller than the opening size or area or diameter S₁ and the inner cross-sectional size or area or diameter Sᵢ of the container 10 at the second container end 13. According to the disclosure, the same goes for the handheld device or dispenser 101 and its container 10'.

In some aspects, the container 10 is configured as a nut in itself with a through hole and inner threads 14 at one end, i.e. the first container end 12 and a first integrated tube portion being the container outlet 16 protruding away from the first 12 and second container end 13 towards the inner threads 14 in alignment with the through hole and a second integrated tube portion opposite and protruding in a direction opposite the container outlet 16 in alignment with the through hole and the container outlet 16 and ending by forming the second container end 13 to provide a cavity configured to receive and contain food product 1 in the container 10. The container 10 is configured to form the nut with the inner threads 14 at the first container end 12 being configured with the inner threads arranged on the inner surface of a third integrated tube portion or section 15 arranged radially outwards of and in alignment with and surrounding the container outlet 16. The third integrated tube portion 15 is configured to protrude away from the second container end 13 in parallel with the extension of the container outlet 16 to form a circumferential outer grip with its outer surface at the first container end 12. In some aspects, the container 10 is configured to at least partly have an outer shape and/or surface configured to form a circumferential grip as a large/wide elongated nut. This grip could be an at least partly non-even outer surface and/or wavy outer surface and/or one or more protrusions on the outer surface of the container 10 and/or the hard container shell 11 as long as the inside of the container 10 has an inner surface being smooth and/or level and/or even and/or polished. This is beneficial when detachably threading the container 10 and the housing 30 together as the grip for the hand/-s and finger/-s and the force from the hand/-s are increased without increasing the effort in threading. This is achieved in that the torque for threading is provided by a longer or radial distance from the axis of rotation due to the size of the container 10 creating a better grip and longer torque arm when gripping around the mantle surface of the container 10 and then threading by rotating the container when detachably assembling the container 10 to the outer threads 35 of the housing 30 to detachably connect first housing end 31 to connector 14, see figs. 4 - 8 and 13 - 15. This also provides a better grip of the container 10 to detachably thread the container like a nut to the housing 30 when assembling the dispenser 10 or to detachably thread the container off/from the housing 30 when disassembling the container 10 and the housing 30. The housing 30 has a shape being substantially round or cylindrical with the handle 33 as a protruding entity also facilitating the grip of the housing 30 when the housing 30 and the container 10 is detachably assembled or disassembled by threading as a nut. This eliminates any need of any separate fastening device or connector to detachably connect the container 10 and the housing 30. Further, it is specified that the piston 20 is meant as a movable wall that slides adherently and leak-proof to the internal walls of the container 10. The container 10 is in some aspects configured with a circular or oval or elliptical or quadrilateral cross-section. The piston 20 has a complementary outer shape to the inner shape of the container 10. With reference to fig. 13, the container 10 forms a cylindrical body and the piston 20 has a complementary outer shape to the inner shape of the cylindrical hollow container body. The piston 20 is configured to be arranged opposite the outlet 16 of the container 10. With reference to figures 1, 2, 5 - 8, and 15, the piston 20 ensures a sealed closure of the container 10 of food product 1, such as comestible cream. The container 10 is configured to be in fluid communication with the housing 30 and hose member 40 and nozzle 50 when the different parts of the handheld chamber 100 is assembled together. According to the disclosure, the same goes for the handheld device or dispenser 101 with its container 10'.

In some aspects, the container 10 is configured with a decreasing inner dimension, i.e. inner cross-sectional size or area or diameter Sᵢ, S₁, S₂ longitudinally from the second container end 13 towards and to the first container end 12. This improves the sealing between the piston 20 and the inner surface of the container 10 during use of the handheld dispenser 100 to dispense food product 1. According to the disclosure, the same goes for the handheld device or dispenser 101.

In some aspects, the handheld device or dispenser 100 comprises the container 10 being configured with an increasing wall thickness T₁, T₂ from the second container end 13 towards and to the first container end 12. In some aspects, the handheld device or dispenser 100 has a wall thickness T₁, T₂ increasing radially inwards and along the inside of the container 10 from the second container end 13 to the first container end 12. According to the disclosure, the same goes for the handheld device or dispenser 101.

The inlet portion 44 of the hose member 40 is supported from the outside by the housing 30 surrounding the hose member inlet portion 44 by means of the first housing end 31 arranged externally and radially around the hose member inlet portion to prevent the inlet portion 44 from expanding in radial directions when the pressure in the hose member is increased. This radial support for the inlet portion 44 from the housing 30 in combination with the first check valve end 61 and the inlet portion 44 being further pressed together axially, i.e. in a direction in parallel with the longitudinal directions of the container 10 and the housing 30 and the hose member 40 when the container 10 is detachably tightened at assembly to the housing 30 improves the secure engagement and airtightness there between further. This is possible as the housing 30 is also working as an anvil in the axial direction as the housing and the container are made by hard plastic while the hose member 40 and the separate check valve 60 and its first end 61 are not, wherefore the "softer" and more pliable inlet portion 44 and first check valve end 61 are further pressed or "squeezed" together. This prevents leakage from arising even further between the attachment part 61, i.e. the separate check valve 60 and the inlet portion 44 of the hose member 40 during dispensing of food product 1 out of the handheld dispenser 100 and also eliminates the coming loose of the check valve 60 from the hose member 40 when high pressures arise inside the hose member during dispensing as the check valve is clamped into firmer engagement with the first hose end 41 by the inner container protrusion 16 forming the container outlet or discharge opening when the first container end 12 is detachably connected to the first end 31 of the housing 30 to make up the handheld dispenser 100 as assembled, see figs. 5 to 7.

The housing 30 is designed so as to allow insertion of the separate hose member 40 and the separate second check valve 60 therein before the container 10 is detachably attached to the first end 31 of the housing. Before the hose member 40 is removably inserted into the housing 30, the separate discharge valve nozzle 50 is detachably connected to the second end 42 of the hose member. Before the hose member 40 is removably inserted into the housing 30, the handle 33 and the plunger 34 are detachably inserted into and connected to the outside of the housing 30. Before the hose member 40 is removably inserted into the housing 30, the separate check valve 60 is detachably connected to the first end 41, i.e. the inlet portion 44 of the hose member 40. The housing 30 is configured to be a pump for dispensing food product 1 from the container 10, through the separate second check valve 60 and the inlet portion 44 and into and through the hose member 40 configured as a pump chamber working as a dug and out through the discharge valve nozzle 50. The pump functionality of the housing 30 with its pump chamber = hose member 40 to enable the dispensing and discharge of food product 1 is achieved in that the housing 30 has pressure means in the form of a manually operable handle 33 and a plunger 34 movably attached together and to the outside of the housing 30 that compress the hose member 40 when the housing 30 and the handle 33 is gripped simultaneously by hand and the handle is then pushed/pressed, thereby simultaneously pushing and pressing the plunger 34 onto the flexible hose member 40 to act as a dug.

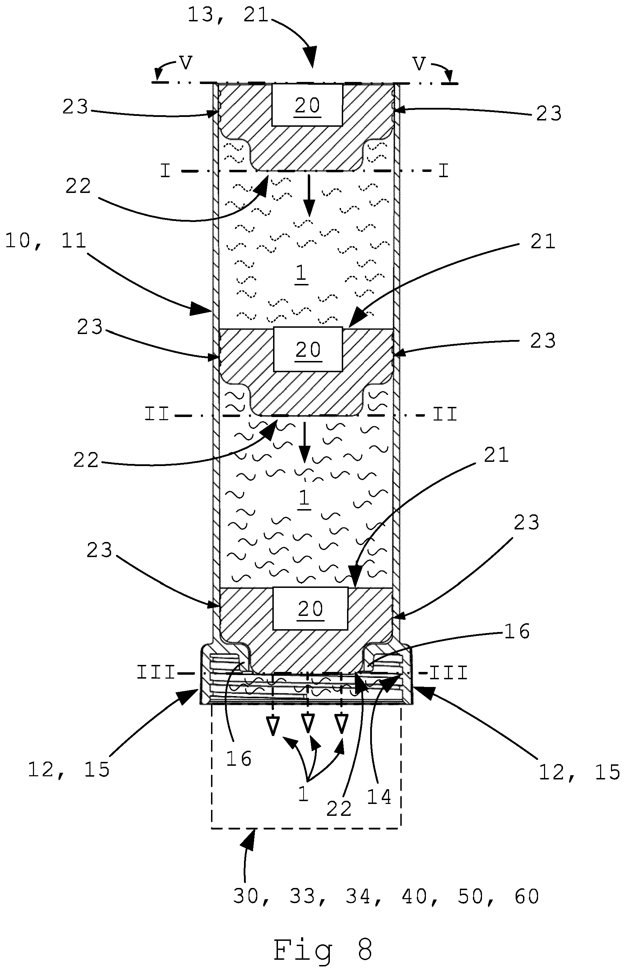

The handle 33 is pushed or pressed with a dispensing movement shown with a dashed arrow with a filled/black head in fig. 6, whereby the plunger 34 is also pushed or pressed inside the slot 36 of the housing 30 in order to press in side portions 40a (see also fig. 9) of the hose member 40 into it and into the housing 30 in a direction towards opposite portions of the housing 30 that constitute support for the hose member 40. By this compressing of the side portion 40a, the volume in the hose member 40 is reduced causing product 1 to be dispensed therefrom as shown by a bending line B in dashed lines within the hose member 40 of fig. 6. The arrows shown in dashed lines and with non-filled heads in figs. 6, 7 and 8 visualize the flow or movement or discharge of food product 1 in and out of the handheld dispenser 100 and the symbols resembling the letter S lying down in figs. 5 to 8 visualize food product 1. The straight arrows shown in solid lines and with filled/black heads in fig. 8 visualize the movement of the piston 20 that moves with the food product 1 by sliding or in principle "floating" inside the container 10 towards the container outlet 16 in response to the diminishing volume and the food product 1 itself being reduced in amount when dispensing and discharge of the food product 1 occurs. This piston 20 thereby reduces the food product containing volume of the container 10 in perfect "harmony" or synchronization with the dispensing and discharge of food product 1 by directly following the "movement", i.e. the "sinking" surface of the food product 1 in proportion to food product being discharged out of the dispenser 100, which eliminates or at least almost fully reduces the amount or volume of air inside the container 10 that may affect the food product 1 negatively.

The pressure means, i.e. the handle 33 and plunger 34 are in some aspects so arranged that differently dimensioned dispensing movements with different predetermined sizes or distances to achieve different predetermined volume reductions of the inner parts of the hose member 40 and thus be able to portion out or dispense different predetermined quantities of food product 1 from the hose member 40 at each dispensing portioning instance, such as is disclosed in the applicants own international patent application WO 2013/084203 A1.

The pumping device or system for the handheld dispenser 100, 101 is achieved by parts 30 - 39, 40 - 44, 50 -51 and 60 - 62 as shown in figs. 4, 12, and 16 to 18, which pumping system when assembled together is applicable for detachable attachment to any suitable container, e.g. at least the two different embodiments of containers 10, 10', such as the one 10 shown in figs. 1 to 8, 13 and 15 forming one part of an embodiment of a handheld dispenser 100, and the container 10' shown in figs. 16 to 20 forming one part of another embodiment of a handheld dispenser 101. A difference between the container 10 and the other container 10' is that the other container 10' is shown comprising one or more optional holders or attachments or brackets or supports 80 being either integrated at/on the first end 12' of the container 10' or detachably arranged at/on the first end 12' of the container 10' for detachable assembly of optional weight assisting or weight balancing device or manipulator when an operator holds/uses the handheld dispenser 100, 101 improving ergonomics. The fastening of the weight assisting or weight balancing device or manipulator could be done by screwing or hooking to the holders 80. These holders or supports 80 may in some embodiments be applied to the other container 10. These holders 80 of the container 10 and/or the other container 10' provide in some embodiments an improved access for assembly of weight balancing equipment and/or better grip of the first end 12, 12' and/or the grip 15, 15' as the holders 80 protrude out a distance from the first end 12', this is also applicable for the other container 10 when present thereon.

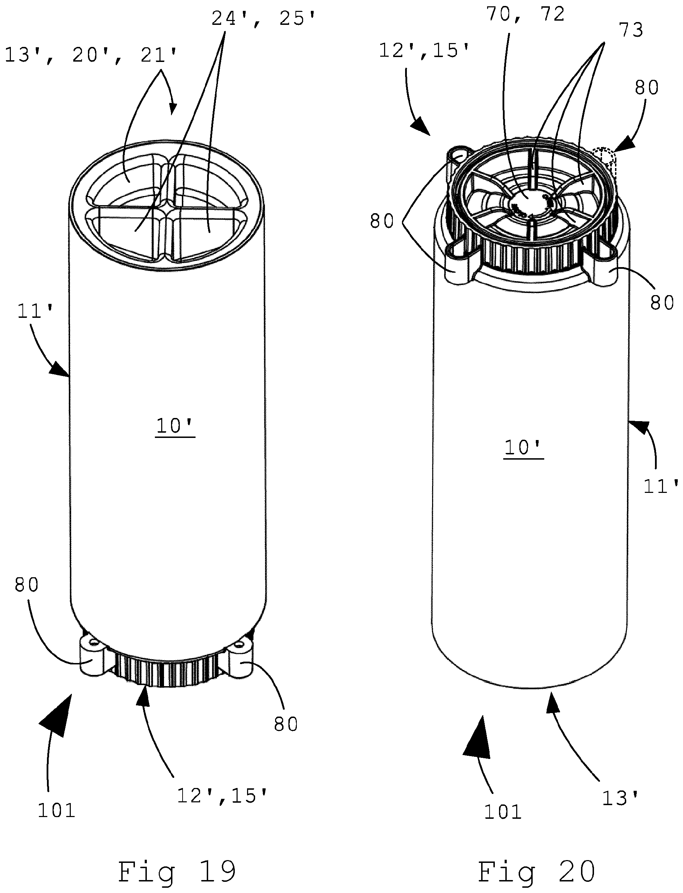

In some embodiments of the container, any of the containers is detachably assembled to a lid or end cover 70 as shown in figs. 19 and 20 for the container 10', i.e., the other container 10 could also comprise this lid 70, even though this is not shown in figs. 1 to 8, 13 and 15. This detachable lid/end cover 70 as shown in figs. 19, 20, 23 and 24 is configured to be threaded on/into first container end 12, 12' for leak-free and intermediate storage (such as a preprepared shelf product in room temperature or in a hot or cold storage space or room) of a container 10, 10' filled at least partly or fully by product 1 when attached to the container and threaded off/from and removed from the container when the container is to be attached to the pump system or device 40, 50, 60 and housing 30 for dispensing. A first end 71 of the lid 70 is configured to be in contact with food product 1 when assembled to the first end 12, 12' of the container. A second end 72 of the lid 70 is configured to be exposed and accessible when assembled. The lid 70 comprises one or more, e.g. six as shown, protrusions or walls or ribs 73 forming open compartments and grips to enable easy gripping and threading of the lid onto (not shown) or into the first end 12, 12' and vice versa, i.e. threaded from or out of the container 10, 10' when the container is to be assembled to the pumping system as shown in figs. 1 to 8, 13 and 15 to 18. For this purpose, the lid 70 comprises outer circumferential threads 74 as shown or inner threads (not shown) of the cylindric lid for fitting to the connector 14, 14' shown as inner threads but could in other embodiments (not shown) be outer threads. These holders 80 act in some embodiments as additional supports or legs when the container 10, 10' is stored - as an intermediate storage of food product 1 - with the lid 70 attached as shown in fig. 19 upstanding vertically on the first end 12, 12' and/or the lid 70 and/or the supports 80 as stabilizing feet. In some embodiments, the holders 80 also aid in preventing the container 10, 10' from rolling around if the container 10, 10' - when equipped with the pumping system and the handle 33, even though the handle 33 also hinders rolling of the container when assembled, or when equipped with lid 70 for intermediate storage or buffering and not attached with the pumping device - is laid down or supported in a more or less horisontal position as shown in views C and D of fig. 15. In some embodiments, there could be three holders or supports 80 as shown or four (a fourth support 80 is shown in dotted lines in fig. 20) or five or six or more as long as they are arranged in such a way that the support provided by them fulfils the purpose of stable support when standing (in fig. 20, then the supports 80 are arranged closer to the edge of the grip 15' and/or prolonged towards that edge) and/or well-balanced weight assisting when a weight balancing lift equipment is detachably connected to the handheld dispenser 100, 101.

In figs. 19 and 20, a container 10' filled by product 1 is shown standing on the first end 12' in fig. 19 exposing the piston 20' facing upwards and shown turned upside down in fig. 20 with the second end 13' facing downwards to show the lid 70 exposed before disassembly from the container 10' or after assembly thereto.

To be able to activate the pumping system and compress the hose member 40 by the lowest possible compressive force on the pressure means, i.e. the handle 33, the plunger 34 is pivotally connected with a first end 34a to the handle 33 and the handle 33 is pivotally mounted on the outside of the housing 30 as a single-arm lever. The plunger 34 comprises a second elongated end 34b configured to engage the hose member 40 and its side portions 40a when the handle 33 is pressed. The first plunger end 34a comprises protruding pins 39 extending perpendicularly to the extension of the plunger. The handle comprises a free upper end 33a and a lower end 33b to be pivotally connected to the outside of the housing 30. The handle 33 comprises a seat 33c formed as a round open slit configured to pivotally receive the first plunger end 34a with its pins 39 to thereafter form a hinge-like and detachable attachment between the handle and the plunger, see figs. 4 and 16 to 18. This round open slit on the handle 33 for receiving the pins 39 of the plunger 34 is shown arranged at a centre portion or section of the handle but could in some aspects be arranged at another suitable location on the handle.

The housing 30 has one first oblong through slot 36 extending in a longitudinal direction along a part of the housing, and the plunger 34 is oblong, extending with its second end 34b along and inside the slot 36 and the housing 30 between the outside of the hose member 40 and the inside of the housing 30 at the section of where the slot 36 is arranged when the handle 33 and the plunger 34 are detachable assembled in the housing 30. The plunger 34 is insertable with its second end 34b into the slot 36 and the housing 30 in order to compress the side portion/-s 40a of the hose member 40 inside the housing 30. The handle 33 is pivotably mounted with the second lower end 33b at the outside of the housing 30 as shown in figs. 1, 2, 5, 6, and 7 below the slot 36 for leverage effect, the same is shown in figs. 16 to 18. The handle 33 comprises pins 38 at the lower end 33b protruding perpendicularly to the length of the handle and the oblong slot 36 ends in a seat 37 configured to pivotally receive the pins 38 of the handle that are configured to be detachably, and thus the handle 33 may be pivoted so that the side portion/-s 40a of the hose member 40 within upper portions 36a of the slot 36 are pressed farther into the housing 30 than the hose member 40 within the lower portions 36b of the slot 36 closer to the lower seat 37 where the handle 33 is pivotally attached. The same above and below is applied to provide the handheld dispenser 101 with the same pump functionality as the handheld dispenser 100.

The hose member 40 is so flexibly formed that its compressed side portion/-s 40a can spring back to an original shape, and thereby they can return the plunger 34 and the handle 33 from a compressing position as shown with the dashed contour line B of fig. 6 and the bent shape in fig. 9 to its initial position shown in solid lines in figs. 1, 3, 5, 6, 7 and 15 before the handle 33 is pressed in again for further dispensing.

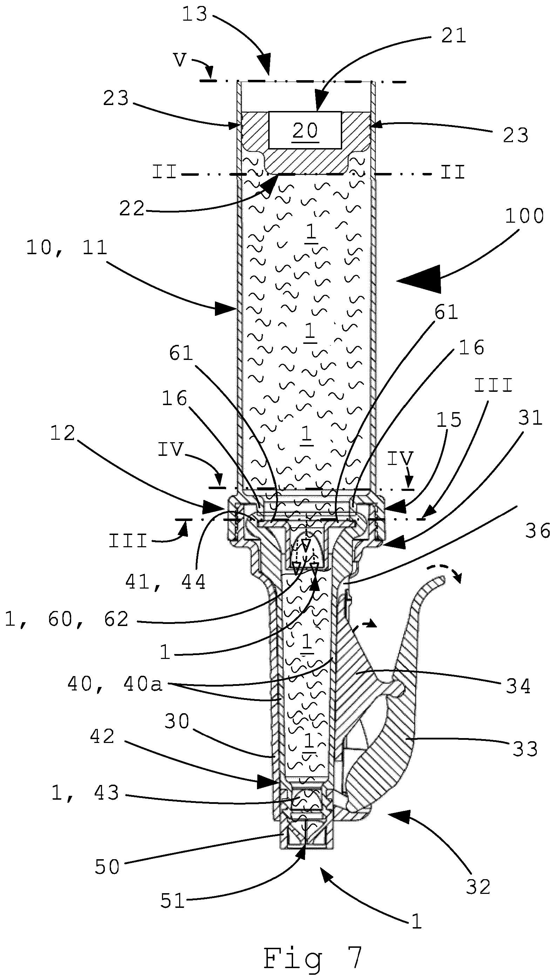

Furthermore, the handle 33 can preferably be snapped onto, i.e. into the outer seat 37 below the slot 36 on the housing 30 so as to be pivotable in relation thereto. When the housing 30 and the handle 33 are gripped by the same hand and pressed, the plunger 34 compresses the hose member 40. This is done in that the side portions 40a of the hose member 40 are compressed as shown in fig. 9 and by the dashed bending line B in fig. 6, and when you let go of the handle 33, the plunger 34 moves away from the hose member 40, whereby the side portions 40a return to their original shape of figs. 5 and 7, whereby an under-pressure arises in the hose member 40, the check valve 60 thereby opening and food product 1 being caused to flow from the container 10 via the container outlet 16 into the hose member 40 (see figs. 6, 7 and 8, arrows in dashed lines with non-filled heads). This also causes the floating piston 20 to move with the food product 1 inside the container 10 from a start or first position I seen in figs. 1, 2, 5, 8 and 15 (upmost position) towards the first container end 12 to another or intermediate or second position II as seen in figs. 6, 7, 8 and 15 (middle position) and to the final or bottoming or stop or end position III as shown in the lowermost position of figs. 7, 8 and 15 when the dispensing and discharge of food product 1 is ended as the container 10 is emptied. For this to happen the handle 33 and thereby the plunger 34 are pressed again and repeatedly (see arrows in dashed lines with filled/black heads in fig. 6 and the compressed shape of the hose member 40, 40a in fig. 9), whereby the pressure in the hose member 40 will rise and close the check valve 60 and open the lower check valve 43 and the discharge nozzle or valve 50, and a specific quantity of food product 1 will be portioned out, i.e. dispensed from the hose member 40 through the discharge nozzle 50 (see fig. 6, arrows in dashed lines and non-filled heads). When this dispensing portioning has been completed and you let go of the handle 33, the side portion 40a of the hose member 40 returns to its original shape (from the compressed shape of contour line B in figs. 6 and 9) and returns the handle 33 and the plunger 34 to its initial position (see arrows in dashed lines with filled/black heads in fig. 7). The volume in the hose member 40 will thereby increase again, and the upper check valve 60 is thereby opened again and a new portion of the food product 1 is sucked into the tube member 40 until all food product 1 is emptied out of the container 10 as shown in figs. 8 and 15 in the lowermost position III for piston 20 also closing/corking the first container end 12. The second hose member end 42 comprises the further check valve 43 being an integral part of this end 42 or integrated in this end 42. This additional or second check valve 43 being an integrated part of the second hose member end 42 is formed as a neb (as the other check valve 60) that opens up when pressure inside the neb, i.e. inside the hose member being the pump chamber 40 is higher than pressure outside the neb, i.e. higher than the pressure inside the outlet/discharge nozzle valve 50, whereby also the discharge nozzle valve 50 opens up as shown in fig. 6 to discharge food product 1 out of the dispenser 100. In some aspects, the discharge nozzle valve 50 also acts as a check valve to further reduce or even eliminate intake of air into the hose member 40 and/or the container 10 if solid pieces/items of food product 1 become "stuck" in any of the check valves 43, 50, 60 so that at least one or more or all of them closes, thereby eliminating the risk of any of them being kept open not being able to close due to the obstruction. The dispensing as visualized by positions I, II and III for the piston 20 are only examples, i.e. during dispensing, the piston may be moved to any other intermediate position II than the one shown, hence, the only positions that is more of "predetermined" positions are the start position I and the end position III.

The piston 20 shown in figs. 1, 2, 4, 5, 6, 7, 8 and 10 has two ends, one end 21 facing outwards from the container 10 when assembled there inside and one end 22 facing inwards of the container and configured to be in contact with the food product 1. The piston 20 has a similar shape as a puck. The piston 20 also comprises one or more circumferential outer sealing/-s in the form of one or more protruding ribs 23 that are configured to sealingly engage and contact the inside of the container 10 and scrape food product down towards the container outlet 16 during dispensing. The first piston end 21 is formed with an indentation facing outwards and away from the second container end 13. The first piston end 21 comprises a protrusion 24 enabling and simplifying manually gripping the piston 20 to remove the piston from and to insert the piston into the container 10. The first piston end 21 comprises reinforcing walls 25 inside the indentation. The piston 20 is an inner slidable puck-like or movable wall part configured to "float" on the food product 1 inside the container 10 and follow the movement of the level or surface of food product 1 during dispensing. The piston 20 is made of an elastic/resilient/flexible material, such as silicone, to fit slidingly inside the container 10. The second piston end 22 is shaped to snugly fit into the bottom of the container 10, similar to a plug, at the first container end 12 and into the container outlet 16 when the piston 20 has reached the end and bottoms when all food product 1 are discharged.

In some embodiments of the handheld dispenser 100, the piston 20 comprises a flexible thinning/thin wall or membrane 26 being made in at least a part of the piston 20. In some embodiments of the handheld dispenser 100, the piston 20 comprises one or more slits 27 through the flexible thin wall/membrane 26 of the piston 20, which slit(s) 27 functions as ventilation or airing opening(s) and/or valve(s) to let out air inside the container 10 but hindering air leaking into the container 10. In some embodiments of the handheld dispenser 101, the piston 20' comprises a flexible thinning/thin wall or membrane 26' being made in at least a part of the piston 20'. In some embodiments of the handheld dispenser 101, the piston 20' comprises one or more slits 27' through the flexible thin wall/membrane 26' of the piston 20', which slit(s) 27' functions as ventilation or airing opening(s) and/or valve(s) to let out air inside the container 10' but hindering air leaking into the container 10'.

One or more aspects of the pressure means, i.e. the handle 33 and the plunger 34 can be configured to portion out, i.e. dispense a specific quantity of food product 1 from the hose member 40, and the handle 33 and the plunger 34 may be interchangeable with another handle 33 and/or plunger 34 of another aspect with other dimensions providing a longer or shorter stroke and/or different angle of engagement for the plunger and/or the handle pressing the plunger towards the hose member 40 more or less by pumping when the handle is pressed to portion out, i.e. dispense a different amount of food product 1 depending on the chosen different handle 33 and/or plunger 34. In combination therewith, or as alternative thereto, the position of the plunger 34 and/or the handle 33 on the housing 30 can be changed, e.g. by having differently positioned seats on the housing 30 for the pins on the handle 33 that can be chosen by detaching the handle and assembling it in another pivot seat higher up or lower down on the housing 30 or at another distance from the housing to give another leverage and/or stroke length so as to achieve the same purpose. The shape of the plunger 34 is in some aspects changeable to provide varying engagement on the hose member 40 to compress it more, i.e. deeper or farther, or less and/or to compress the hose member at or from one or more different positions and/or from one or more different angles. In some aspects, the plastic used for making one or more or all parts of the handheld dispenser 100, such as the container is recyclable.

The container 10' shown in figs. 16 to 20 is according to the disclosure provided with at least the same features as for the container 10 shown in figs. 1 to 8, 13 and 15 including the first outer cross-sectional size or area or diameter Sₒ of the second container end 13, 13'; the inner cross-sectional size or area or diameter Sᵢ of the opening at the second container end 13, 13'; the first inner size or area or diameter S₁ of the container 10, 10'; the second inner size or area or diameter S₂ of the container 10, 10'; the third inner size or area or diameter S₃ of the container 10, 10'; the second outer cross-sectional size or area or diameter S₄ of the second container end 13, 13'; the first thickness T₁ of the container wall or enclosure 11, 11' at the second container end 13, 13', and the second thickness T₂ of the container wall/enclosure 11, 11' at the first container end 12, 12'. Hence, the container 10' also has a varying inner shape as for the container 10. The second aspect or embodiment of this disclosure concerns the handheld device or dispenser 101 that includes at least a container 10' with a piston 20' with the same features, i.e. sealing ribs 23' and fitting side/end 22'; and compressing container end edge 16' etc., besides the other applicable features for both handheld dispensers 100, 101, such as materials used being recyclable and inner surface and shape characteristics of their containers, as the container 10 and the piston 20 of the handheld device or dispenser 100 of the first aspect or embodiment. Moreover, one or both of the containers 10 and 10' of the handheld dispensers 100, 101 may include the detachable lid or end cover 70 opposite the piston 20, 20' when stored as a preprepared filled container 10. 10'.

### NOMENCLATURE

1: Food product in fluid form.
10, 10': Container made of food graded transparent material.
11, 11': Hard shell/enclosure of the container.
12, 12': First end of container.
13, 13': Second end of container.
14, 14': Connector in the form of inner threads at first container end 12, 12'.
15, 15': Circumferential grip at first container end 12, 12' comprising outer ribs.
16, 16': Inner protrusion/upstanding flange/edge of first container end 12, 12' pressing on first pump chamber/housing end 41 when the dispenser 100, 101 is assembled.
20, 20': Inner slidable/floating piston made of elastic/resilient/flexible material, such as silicone, to fit slidingly inside the container 10, 10'.
21, 21': First end of piston formed with an indentation and facing outwards and away from second container end 13, 13'.
22, 22': Second end of piston facing inwards and towards first container end 12, 12'.
23, 23': Circumferential outer sealing(s) of piston formed as one, two, three or more protruding ribs.
24, 24': Protrusion(s) in/at/on first piston end to manually grip to remove piston from and insert into container 10, 10'.
25, 25': Reinforcing walls of piston 20, 20'.
26, 26': Flexible thinning/thin wall or membrane of at least a part of piston 20, 20'.
27, 27': Slit(s) through flexible thin wall/membrane in piston working as ventilation- or airing opening to let out air inside container but hindering air leaking into container.
30: Elongated housing formed as a tube member of plastic to be held in a hand and configured to work as a pump housing enclosing the pump chamber 40.
31: First end of housing for detachable attachment to first container end 12, 12'.
32: Second end of housing with opening as mouth enabling the food product outlet to open up for dispensing.
33: Handle detachable attached to the outside of housing 30 to be manually pushed at a free end by hand for pumping food product by pivoting at a second end.
33a: Free upper handle end.
33b: Lower handle end.
33c: Seat to pivotally receive first plunger end 34a.
34: Pressure means or plunger detachably and pivotable attached to handle and configured to press on pump chamber 40 when handle is pushed towards housing.
34a: First plunger end.
34b: Second plunger end.
35: Outer threads to detachably connect first housing end 31 to connector/connecting inner threads 14, 14'.
36: Opening/Slit/Slot into housing to receive plunger 34 + parts of handle 33.
36a: First/Upper portion of slot being wider than the remaining slot 36 extending between this first slot portion and a second slot portion 36b.
36b: Second/Lower portion of slot being wider than the remaining slot 36 extending between first slot portion 36a and this second slot portion 36b.
37: Outer seat forming end of slot 36 to pivotally receive lower handle end 33b.
38: Pin/-s on handle 33 to form pivot point as detachably received in seat 37.
39: Pin/-s on plunger 34 to form pivot point as detachably received in handle seat 33c.
40: Inner pump chamber formed as a hollow hose/dug member made of elastic and resilient/flexible material, such as silicone, to fit detachably inside housing 30.
40a: Compressible side portion/-s of hose/dug member 40
41: First hose end detachably and airtight connected to a separate check valve and first container end 12, 12'.
42: Second hose end detachably and airtight attachable to an outlet nozzle 50 at second housing end 32.
43: Check valve = an integrated part of second pump hose end 42 formed as a neb that opens up when pressure inside the neb, i.e. inside pump chamber/hose/dug member 40 is higher than pressure outside the neb, i.e. inside outlet/discharge nozzle 50.
44: Inlet portion of first hose end 41 forming an annular inner groove.
50: Discharge valve/Outlet nozzle arranged to open so as to allow dispensing of product 1 from hose member 40 and to close when so done and be detachably connected to second pump chamber end 42 and could also work as a check valve.
51: Opening/-s of nozzle 50 openable when sufficiently high pressure is generated inside pump chamber 40 and nozzle itself and closable when the pressure inside pump chamber and nozzle is below opening pressure.
60: Separate hollow check valve detachably and airtight connected to the first pump chamber/hose end 41.
61: First end of separate check valve = a circumferential flange part or integrated plate detachably, securely and airtight engaging inside of annular groove 44 of first pump chamber/hose end 41.
62: Second end of separate check valve 60 formed as a neb that opens up when pressure inside check valve and neb, i.e. in container 10, 10' is higher than pressure outside check valve and neb 60, i.e. in pump chamber 40, and check valve 60 opens up when the pressure inside the pump chamber being the hose member 40 is lower than pressure inside container 10, 10' and that occurs when handle 33 is released.
70: Detachable lid/cover configured to be threaded on/into first container end 12, 12'.
71: First end of lid to be in contact with food product when assembled.
72: Second end of lid to be exposed and accessible when assembled.
73: One or more protrusions forming grips to enable easy gripping and threading.
74: Outer circumferential threads of cylindric lid for fitting to connector 14, 14'.
80: Holder/Attachment/Bracket/Support at/on container.
100, 101: Handheld dispenser.
A, C: Line(s) showing plane(s) of cross-section(s)
B: Contour/Bending line for hose member 40 when pushed/pressed by plunger 34.
H: Horizontal plane or shelf.
Sₒ: First outer cross-sectional size/area/diameter of second container end 13, 13'.
Sᵢ: Inner cross-sectional size/area/diameter of opening at second container end 13, 13'.
S₁: First inner size/area/diameter of container 10, 10'.
S₂: Second inner size/area/diameter of container 10, 10'.
S₃: Third inner size/area/diameter of container 10, 10'.
S₄: Second outer cross-sectional size/area/diameter of second container end 13, 13'.
T₁: First thickness of container wall/enclosure 11, 11' at second container end 13, 13'.
T₂: Second thickness of container wall/enclosure 11 at first container end 12, 12'.
I: First end/Start position for piston 20, 20' when container 10, 10' is filled/full.
II: Intermediate position for piston 20, 20' during/after or before continued dispensing.
III: Second end/Final/Stop position for piston 20, 20' when container 10, 10' is emptied.
IV: A level or plane located at a vertical or longitudinal position relative container 10, 10' at its first end 12, 12' where dimensions S₂ and T₂ are measured/defined/located.
V: Another level or plane located at another vertical or longitudinal position relative container 10, 10' at its second end 13, 13' where dimensions Sᵢ; Sₒ; S₁, and T₁ are measured/defined/located.

## Claims

1. A handheld dispenser (100, 101) for manual dispensing of food product (1), e.g. sauce, mayonnaise, ketchup, mustard, topping, etc., in fluid form, comprising:
- a container (10, 10') made of food-grade material configured to be filled with food product (1) to airtight contain food product and to enable food product to be discharged out of a container outlet (16, 16') and to be refilled with food product when emptied of food product and comprising two ends, a first container end (12, 12') opposite a second container end (13, 13'),
- an inner piston (20, 20') configured to be detachably arranged inside the container (10, 10') and be slidable between a start position (I) at the second container end (13, 13') after the container is filled with food product (1) and be an end lid airtight closing the second container end after fill/refill and a final position (III) bottoming at the first container end (12, 12') to close the container outlet (16, 16') when the container is emptied of food product,
- an elongated housing (30) configured to be securely held in one hand and be detachably attached with a first end (31) to the first container end (12, 12'), the elongated housing (30) comprising a second end (32) arranged opposite the first end (31) with an opening forming a mouth for a discharge valve nozzle (50) enabling discharge of food product (1) and a handle (33) movably attached to the outside of the elongated housing and to pressure means (34) configured to be partly arranged inside the elongated housing through an oblong slot (36) in the elongated housing,
- a pump chamber (40) being a hose member made of flexible material and configured to be arranged inside the elongated housing (30) and the pressure means (34) and be airtight connectable to a first end (61) of a first check valve (60) and the first container end (12, 12') to enable food product (1) to flow from the container (10, 10') into and through the first check valve (60) and the hose member (40) when the hose member is compressed by manually pushing the handle (33) towards the elongated housing (30) moving the pressure means (34) towards the hose member to compress the hose member to dispense food product through a second check valve (43) and finally out of the discharge valve nozzle (50),
**characterized in that** the container (10, 10') is formed as a hard shell/enclosure (11, 11') with a smooth and/or level and/or even and/or polished inside surface and **that** the first (12, 12') and the second container end (13, 13') are open ends, and **that** the second container end (13, 13') has an opening size or area or diameter (S₁) being substantially the same or the same as the inner cross-sectional size or area or diameter (Sᵢ) of the second container end, and **that** the first container end (12, 12') has an opening size or area or diameter (S₂, S₃) being smaller than the opening size or area or diameter (S₁) and the inner cross-sectional size or area or diameter (Sᵢ) of the container (10, 10') at the second container end (13, 13').

2. The handheld dispenser (100, 101) according to claim 1, wherein the inner cross-sectional size or area or diameter (Sᵢ) of the second container end (13, 13') is larger than the inner cross-sectional size or area or diameter (S₂) at the first container end (12, 12') at a position (IV) just before the inner cross-sectional size or area or diameter (S₂) of the first container end (12, 12') and starts decreasing and transcending towards and into the container outlet (16, 16') at the first container end.

3. The handheld dispenser (100, 101) according to any preceding claim, wherein the container (10, 10') is made of food-grade, transparent material, preferably plastic material.

4. The handheld dispenser (100, 101) according to any preceding claim, wherein the first container end (12, 12') comprises the container outlet (16, 16') being an opening formed by an inner upstanding circumferential edge or flange protruding axially outwards from the first container end (12, 12').

5. The handheld dispenser (100, 101) according to any preceding claim, wherein the first check valve (60) is configured to be separate and detachable from the hose member (40).

6. The handheld dispenser (100, 101) according to any preceding claim, wherein the second check valve (43) is configured to be an integral part of or integrated in the second end (42) of the hose member (40).

7. The handheld dispenser (100, 101) according to any preceding claim, wherein the first container end (12, 12') comprises an inner thread (14, 14') configured to be detachably threaded onto outer threads (35) on the first end (31) of the elongated housing (30) when detachably assembling the container (10, 10') onto the elongated housing.

8. The handheld dispenser (100, 101) according to any preceding claim, wherein the second container end (13, 13') has an outer cross-sectional size or area or diameter (Sₒ) and the first container end (12, 12') has an end section with an outer cross-sectional size or area or diameter (S₄), wherein the outer cross-sectional size or area or diameter (S₄) of the first container end (12, 12') is about the same size or has exactly the same size or is larger than the outer cross-sectional size or area or diameter (Sₒ) of the second container end (13, 13').

9. The handheld dispenser (100, 101) according to any preceding claim, wherein the container (10, 10') is configured as a nut with a through hole and inner threads (14, 14') at one end being the first container end (12, 12') and a first integrated tube portion being the container outlet (16, 16') protruding away from the second container end (13, 13') towards the inner threads in alignment with the through hole and a second integrated tube portion opposite and protruding in a direction opposite the container outlet (16, 16') in alignment with the through hole and the container outlet (16, 16') and ending by forming the second container end (13, 13') to provide a cavity configured to receive and contain food product in the container (10, 10').

10. The handheld dispenser (100, 101) according to claim 9, wherein the container (10, 10') forming the nut with the inner threads (14, 14') at the first container end (12, 12') is configured with the inner threads arranged on the inner surface of a third integrated tube portion (15, 15') arranged radially outwards of and in alignment with the container outlet (16, 16'), the third integrated tube portion (15, 15') protruding away from the second container end (13, 13') in parallel with the container outlet (16, 16') to form a circumferential grip at the first container end (12, 12').

11. The handheld dispenser (100, 101) according to any preceding claim, wherein the container (10, 10') is configured with a decreasing inner cross-sectional size or area or diameter (Sᵢ, S₁, S₂) longitudinally from the second container end (13, 13') towards and to the first container end (12, 12').

12. The handheld dispenser (100, 101) according to any preceding claim, wherein the container (10, 10') is configured with an increasing wall thickness (T₁, T₂) from the second container end (13, 13') towards and to the first container end (12, 12').

13. The handheld dispenser (100, 101) according to claim 12, wherein the wall thickness (T₁, T₂) increases radially inwards and along the inside of the container (10, 10') from the second container end (13, 13') to the first container end (12, 12').

14. The handheld dispenser (100, 101) according to any preceding claim, wherein the container (10, 10') at least partly has an outer shape and/or surface configured to form a circumferential grip (80).

## Patentansprüche

1. Handgeführter Spender (100, 101) zum manuellen Ausgeben eines Lebensmittelprodukts (1), z. B. Soße, Mayonnaise, Ketchup, Senf, Topping usw. in Fluidform, umfassend:
- einen Behälter (10, 10'), der aus lebensmittelechtem Material hergestellt ist, das dazu konfiguriert ist, mit einem Lebensmittelprodukt (1) befüllt zu sein, ein Lebensmittelprodukt luftdicht zu enthalten und zu ermöglichen, dass das Lebensmittelprodukt aus einem Behälterauslass (16, 16') entleert wird und mit dem Lebensmittelprodukt neu befüllt wird, wenn das Lebensmittelprodukt leer ist, sowie zwei Enden umfasst, wobei ein erstes Behälterende (12, 12') einem zweiten Behälterende (13, 13') gegenüberliegt,
- einen inneren Kolben (20, 20'), der dazu konfiguriert ist, lösbar im Inneren des Behälters (10, 10') angeordnet zu sein und zwischen einer Startposition (I) an dem zweiten Behälterende (13, 13') verschiebbar zu sein, nachdem der Behälter mit einem Lebensmittelprodukt (1) gefüllt wurde, und ein Enddeckel zu sein, der das zweite Behälterende nach dem Füllen/Neufüllen luftdicht schließt, sowie einer Endposition (III), die an dem ersten Behälterende (12, 12') ein Tiefpunkt bildet, um den Behälterauslass (16, 16') zu schließen, wenn der Behälter von dem Lebensmittelprodukt entleert ist,
- ein verlängertes Gehäuse (30), das dazu konfiguriert ist, sicher in einer Hand gehalten zu werden und mit einem ersten Ende (31) lösbar an dem ersten Behälterende (12, 12') befestigt zu werden, wobei das verlängerte Gehäuse (30) ein zweites Ende (32) umfasst, das gegenüber dem ersten Ende (31) mit einer Öffnung angeordnet ist, die eine Mündung für eine Auslassventildüse (50) ausbildet, welche den Auslass eines Lebensmittelprodukts (1) ermöglicht, sowie einen Griff (33), der bewegbar an der Außenseite des verlängerten Gehäuses und an einem Druckmittel (34) befestigt ist, das dazu konfiguriert ist, durch einen länglichen Schlitz (36) hindurch in dem verlängerten Gehäuse teilweise im Inneren des verlängerten Gehäuses angeordnet zu sein,
- eine Pumpkammer (40), die ein Schlauchelement ist, das aus flexiblem Material hergestellt und dazu konfiguriert ist, im Inneren des verlängerten Gehäuses (30) und des Druckmittels (34) angeordnet zu sein und mit einem ersten Ende (61) eines ersten Rückschlagventils (60) und dem Behälterende (12, 12') luftdicht verbindbar zu sein, um zu ermöglichen, dass ein Lebensmittelprodukt (1) aus dem Behälter (10, 10') in und durch das ersten Rückschlagventil (60) und das Schlauchelement (40) hindurch strömt, wenn das Schlauchelement durch manuelles Drücken des Griffs (33) in Richtung des verlängerten Gehäuses (30) zusammengedrückt wird, welches das Druckmittel (34) in Richtung des Schlauchelements bewegt, um das Schlauchelement zum Ausgeben eines Lebensmittelprodukts durch ein zweites Rückschlagventil (43) hindurch zusammenzudrücken und schließlich aus der Auslassventildüse (50) herauszudrücken,
**dadurch gekennzeichnet, dass** der Behälter (10, 10') als Hartschale/Umhausung (11, 11') mit einer glatten und/oder flachen und/oder ebenen und/oder polierten Innenfläche ausgebildet ist und **dass** das erste (12, 12') und das zweite Behälterende (13, 13') offene Enden sind, und **dass** das zweite Behälterende (13, 13') eine Öffnungsgröße oder einen Öffnungsbereich bzw. -durchmesser (S₁) aufweist, die bzw. der im Wesentlichen dieselbe oder derselbe wie die innere Querschnittsgröße oder der innere Querschnittsbereich bzw. - durchmesser (Sᵢ) des zweiten Behälterendes ist, und **dass** das erste Behälterende (12, 12') eine Öffnungsgröße oder einen Öffnungsbereich bzw. -durchmesser (S₂, S₃) aufweist, die kleiner als die Öffnungsgröße oder der Öffnungsbereich bzw. -durchmesser (S₁) und die innere Querschnittsgröße oder der innere Querschnittsbereich bzw. -durchmesser (Sᵢ) des Behälters (10, 10') an dem zweiten Behälterende (13, 13') ist.

2. Handgeführter Spender (100, 101) nach Anspruch 1, wobei die innere Querschnittsgröße oder der innere Querschnittsbereich bzw. -durchmesser (Sᵢ) des zweiten Behälterendes (13, 13') größer als die innere Querschnittsgröße oder der innere Querschnittsbereich bzw. -durchmesser (S₂) an dem ersten Behälterende (12, 12') an einer Position (IV) direkt vor der inneren Querschnittsgröße oder dem inneren Querschnittsbereich bzw. -durchmesser (S₂) des ersten Behälterendes (12, 12') ist und beginnt, in Richtung des Behälterauslasses (16, 16') an dem ersten Behälterende und in diesen abzunehmen und sie bzw. ihn zu übersteigen.

3. Handgeführter Spender (100, 101) nach einem der vorhergehenden Ansprüche, wobei der Behälter (10, 10') aus lebensmittelechtem transparentem Material, bevorzugt Kunststoffmaterial, hergestellt ist.

4. Handgeführter Spender (100, 101) nach einem der vorhergehenden Ansprüche, wobei das erste Behälterende (12, 12') den Behälterauslass (16, 16') umfasst, der eine Öffnung ist, die durch eine innere hochstehende Umlaufkante oder einen inneren hochstehenden Umlaufflansch ausgebildet ist, die bzw. der von dem ersten Behälterende (12, 12') axial nach außen vorsteht.

5. Handgeführter Spender (100, 101) nach einem der vorhergehenden Ansprüche, wobei das ersten Rückschlageventil (60) dazu konfiguriert ist, von dem Schlauchelement (40) getrennt und lösbar zu sein.

6. Handgeführter Spender (100, 101) nach einem der vorhergehenden Ansprüche, wobei das zweite Rückschlagventil (43) dazu konfiguriert ist, ein integraler Bestandteil von dem zweiten Ende (42) des Schlauchelements (40) oder in dieses integriert zu sein.

7. Handgeführter Spender (100, 101) nach einem der vorhergehenden Ansprüche, wobei das erste Behälterende (12, 12') ein Innengewinde (14, 14') umfasst, das dazu konfiguriert ist, lösbar auf einem Außengewinde (35) auf dem ersten Ende (31) des verlängerten Gehäuses (30) beim lösbaren Montieren des Behälters (10, 10') auf das verlängerte Gehäuse aufgeschraubt zu sein.

8. Handgeführter Spender (100, 101) nach einem der vorhergehenden Ansprüche, wobei das zweite Behälterende (13, 13') eine äußere Querschnittsgröße oder einen äußeren Querschnittsbereich bzw. -durchmesser (Sₒ) aufweist und das erste Behälterende (12, 12') einen Endabschnitt mit einer äußeren Querschnittsgröße oder einem äußeren Querschnittsbereich bzw. -durchmesser (S₄) aufweist, wobei die äußere Querschnittsgröße oder der äußere Querschnittsbereich bzw. -durchmesser (S₄) des ersten Behälterendes (12, 12') etwa dieselbe Größe hat oder exakt dieselbe Größe aufweist oder größer als die äußere Querschnittsgröße oder der äußere Querschnittsbereich bzw. -durchmesser (Sₒ) des zweiten Behälterendes (13, 13') ist.

9. Handgeführter Spender (100, 101) nach einem der vorhergehenden Ansprüche, wobei der Behälter (10, 10') dazu als Mutter mit einem Durchgangsloch und Innengewinden (14, 14') an einem Ende konfiguriert ist, welches das ersten Behälterende (12, 12') ist, sowie als erster integrierter Rohrteil, welcher der Behälterauslass (16, 16') ist, der von dem zweiten Behälterende (13, 13') weg in Richtung der Innengewinde in Ausrichtung mit dem Durchgangsloch und einem zweiten integrierten Rohrteil gegenüber und vorstehend in einer Richtung entgegen dem Behälterauslass (16, 16') in Ausrichtung mit dem Durchgangsloch und dem Behälterauslass (16, 16') vorsteht und durch Ausbilden des zweiten Behälterendes (13, 13') endet, um einen Hohlraum bereitzustellen, der dazu konfiguriert ist, ein Lebensmittelprodukt in dem Behälter (10, 10') aufzunehmen und zu enthalten.

10. Handgeführter Spender (100, 101) nach Anspruch 9, wobei der Behälter (10, 10'), der die Mutter mit den Innengewinden (14, 14') an dem ersten Behälterende (12, 12') ausbildet, mit den Innengewinden konfiguriert ist, die auf der Innenfläche eines dritten integrierten Rohrteils (15, 15') angeordnet sind, der radial nach außen von dem Behälterauslass (16, 16') und in Ausrichtung mit diesem angeordnet ist, wobei der dritte integrierte Rohrteil (15, 15') von dem zweiten Behälterende (13, 13') weg parallel zu dem Behälterauslass (16, 16') vorsteht, um einen Umlaufgriff an dem ersten Behälterende (12, 12') auszubilden.

11. Handgeführter Spender (100, 101) nach einem der vorhergehenden Ansprüche, wobei der Behälter (10, 10') mit einer abnehmenden inneren Querschnittsgröße oder einem abnehmenden inneren Querschnittsbereich bzw. -durchmesser (Sᵢ, S₁, S₂) in Längsrichtung von dem zweiten Behälterende (13, 13') in Richtung des ersten Behälterendes (12, 12') und zu diesem konfiguriert ist.

12. Handgeführter Spender (100, 101) nach einem der vorhergehenden Ansprüche, wobei der Behälter (10, 10') mit einer zunehmenden Wandgröße (T₁, T₂) von dem zweiten Behälterende (13, 13') in Richtung des ersten Behälterendes (12, 12') und zu diesem konfiguriert ist.

13. Handgeführter Spender (100, 101) nach Anspruch 12, wobei die Wanddicke (T₁, T₂) radial nach innen und entlang der Innenseite des Behälters (10, 10') von dem zweiten Behälterende (13, 13') zu dem ersten Behälterende (12, 12') zunimmt.

14. Handgeführter Spender (100, 101) nach einem der vorhergehenden Ansprüche, wobei der Behälter (10, 10') mindestens teilweise eine Außenform und/oder -fläche aufweist, die dazu konfiguriert ist, einen Umlaufgriff (80) auszubilden.

## Revendications

1. Distributeur portatif (100, 101) pour la distribution manuelle d'un produit alimentaire (1), par exemple une sauce, de la mayonnaise, du ketchup, de la moutarde, une garniture, etc., sous forme fluide, comprenant :
- un contenant (10, 10') constitué d'un matériau de qualité alimentaire configuré pour être rempli de produit alimentaire (1) afin de contenir le produit alimentaire de manière étanche à l'air et de permettre au produit alimentaire d'être évacué par une sortie de contenant (16, 16') et d'être rempli à nouveau de produit alimentaire lorsqu'il en est vidé, et comprenant deux extrémités, une première extrémité de contenant (12, 12') opposée à une seconde extrémité de contenant (13, 13'),
- un piston interne (20, 20') configuré pour être agencé de manière détachable à l'intérieur du contenant (10, 10') et pour pouvoir coulisser entre une position de départ (I) au niveau de la seconde extrémité de contenant (13, 13') après que le contenant a été rempli de produit alimentaire (1) et pour constituer un couvercle d'extrémité fermant de manière étanche à l'air la seconde extrémité de contenant après remplissage/nouveau remplissage, et une position finale (III) venant en butée au niveau de la première extrémité de contenant (12, 12') pour fermer la sortie de contenant (16, 16') lorsque le contenant est vidé de produit alimentaire,
- un boîtier allongé (30) configuré pour être tenu fermement dans une main et pour être fixé de manière détachable par une première extrémité (31) à la première extrémité de contenant (12, 12'), le boîtier allongé (30) comprenant une seconde extrémité (32) agencée à l'opposé de la première extrémité (31) avec une ouverture formant une embouchure pour une buse de valve de décharge (50) permettant la décharge du produit alimentaire (1) et une poignée (33) fixée de manière mobile à l'extérieur du boîtier allongé et à des moyens de pression (34) configurés pour être partiellement agencés à l'intérieur du boîtier allongé à travers une fente oblongue (36) ménagée dans le boîtier allongé,
- une chambre de pompe (40) constituée d'un élément formant tuyau souple en matériau flexible et configurée pour être agencée à l'intérieur du boîtier allongé (30) et des moyens de pression (34) et pour pouvoir être reliée de manière étanche à l'air à une première extrémité (61) d'un premier clapet anti-retour (60) et à la première extrémité de contenant (12, 12') pour permettre au produit alimentaire (1) de s'écouler depuis le contenant (10, 10') jusque dans et à travers le premier clapet anti-retour (60) et l'élément formant tuyau souple (40) lorsque l'élément formant tuyau souple est comprimé en poussant manuellement la poignée (33) vers le boîtier allongé (30), déplaçant ainsi les moyens de pression (34) vers l'élément formant tuyau souple pour comprimer l'élément formant tuyau souple afin de distribuer le produit alimentaire à travers un second clapet anti-retour (43) et finalement hors de la buse de valve de décharge (50),
**caractérisé en ce que** le contenant (10, 10') se présente sous la forme d'une coque/enveloppe dure (11, 11') dotée d'une surface intérieure lisse et/ou plane et/ou régulière et/ou polie et **en ce que** la première (12, 12') et la seconde (13, 13') extrémité de contenant sont des extrémités ouvertes, et **en ce que** la seconde extrémité de contenant (13, 13') présente une dimension, une aire ou un diamètre d'ouverture (S₁) qui est sensiblement identique ou identique à la dimension, à l'aire ou au diamètre de section transversale interne (Sᵢ) de la seconde extrémité de contenant, et **en ce que** la première extrémité de contenant (12, 12') présente une dimension, une aire ou un diamètre d'ouverture (S₂, S₃) qui est inférieur à la dimension, à l'aire ou au diamètre d'ouverture (S₁) et à la dimension, à l'aire ou au diamètre de section transversale interne (Sᵢ) du contenant (10, 10') au niveau de la seconde extrémité de contenant (13, 13').

2. Distributeur portatif (100, 101) selon la revendication 1, dans lequel la dimension, l'aire ou le diamètre de section transversale interne (Sᵢ) de la seconde extrémité de contenant (13, 13') est supérieur à la dimension, à l'aire ou au diamètre de section transversale interne (S₂) au niveau de la première extrémité de contenant (12, 12') au niveau d'une position (IV) juste avant la dimension, l'aire ou le diamètre de section transversale interne (S₂) de la première extrémité de contenant (12, 12') et commence à diminuer et forme une transition vers et jusque dans la sortie de contenant (16, 16') au niveau de la première extrémité de contenant.

3. Distributeur portatif (100, 101) selon l'une quelconque des revendications précédentes, dans lequel le contenant (10, 10') est constitué d'un matériau de qualité alimentaire, transparent, de préférence une matière plastique.

4. Distributeur portatif (100, 101) selon l'une quelconque des revendications précédentes, dans lequel la première extrémité de contenant (12, 12') comprend la sortie de contenant (16, 16') qui est une ouverture formée par un bord ou rebord circonférentiel interne dressé faisant saillie axialement vers l'extérieur depuis la première extrémité de contenant (12, 12').

5. Distributeur portatif (100, 101) selon l'une quelconque des revendications précédentes, dans lequel le premier clapet anti-retour (60) est configuré pour être séparé et détachable de l'élément formant tuyau souple (40).

6. Distributeur portatif (100, 101) selon l'une quelconque des revendications précédentes, dans lequel le second clapet anti-retour (43) est configuré pour être une partie solidaire de ou intégrée à la seconde extrémité (42) de l'élément formant tuyau souple (40).

7. Distributeur portatif (100, 101) selon l'une quelconque des revendications précédentes, dans lequel la première extrémité de contenant (12, 12') comprend un filetage interne (14, 14') configuré pour être vissé de manière détachable sur des filetages externes (35) sur la première extrémité (31) du boîtier allongé (30) lors de l'assemblage détachable du contenant (10, 10') sur le boîtier allongé.

8. Distributeur portatif (100, 101) selon l'une quelconque des revendications précédentes, dans lequel la seconde extrémité de contenant (13, 13') présente une dimension, une aire ou un diamètre de section transversale externe (S₀) et la première extrémité de contenant (12, 12') présente une section d'extrémité dotée d'une dimension, d'une aire ou d'un diamètre de section transversale externe (S₄), dans lequel la dimension, l'aire ou le diamètre de section transversale externe (S₄) de la première extrémité de contenant (12, 12') est d'environ la même dimension, est d'exactement la même dimension ou est supérieur à la dimension, à l'aire ou au diamètre de section transversale externe (S₀) de la seconde extrémité de contenant (13, 13').

9. Distributeur portatif (100, 101) selon l'une quelconque des revendications précédentes, dans lequel le contenant (10, 10') est configuré sous la forme d'un écrou doté d'un trou traversant et de filetages internes (14, 14') au niveau d'une extrémité qui est la première extrémité de contenant (12, 12') et d'une première partie de tube intégrée qui est la sortie de contenant (16, 16') faisant saillie en s'éloignant de la seconde extrémité de contenant (13, 13') vers les filetages internes en alignement avec le trou traversant et d'une deuxième partie de tube intégrée opposée à et faisant saillie dans une direction opposée à la sortie de contenant (16, 16') en alignement avec le trou traversant et la sortie de contenant (16, 16') et se terminant en formant la seconde extrémité de contenant (13, 13') pour fournir une cavité configurée pour recevoir et contenir du produit alimentaire dans le contenant (10, 10').

10. Distributeur portatif (100, 101) selon la revendication 9, dans lequel le contenant (10, 10') formant l'écrou doté des filetages internes (14, 14') au niveau de la première extrémité de contenant (12, 12') est configuré avec les filetages internes agencés sur la surface interne d'une troisième partie de tube intégrée (15, 15') agencée radialement à l'extérieur de et en alignement avec la sortie de contenant (16, 16'), la troisième partie de tube intégrée (15, 15') faisant saillie en s'éloignant de la seconde extrémité de contenant (13, 13') parallèlement à la sortie de contenant (16, 16') pour former une zone de préhension circonférentielle au niveau de la première extrémité de contenant (12, 12').

11. Distributeur portatif (100, 101) selon l'une quelconque des revendications précédentes, dans lequel le contenant (10, 10') est configuré avec une dimension, une aire ou un diamètre de section transversale interne décroissant (Sᵢ, S₁, S₂) longitudinalement depuis la seconde extrémité de contenant (13, 13') en direction et jusqu'à la première extrémité de contenant (12, 12').

12. Distributeur portatif (100, 101) selon l'une quelconque des revendications précédentes, dans lequel le contenant (10, 10') est configuré avec une épaisseur de paroi croissante (T₁, T₂) depuis la seconde extrémité de contenant (13, 13') en direction et jusqu'à la première extrémité de contenant (12, 12').

13. Distributeur portatif (100, 101) selon la revendication 12, dans lequel l'épaisseur de paroi (T₁, T₂) augmente radialement vers l'intérieur et le long de l'intérieur du contenant (10, 10') depuis la seconde extrémité de contenant (13, 13') jusqu'à la première extrémité de contenant (12, 12').

14. Distributeur portatif (100, 101) selon l'une quelconque des revendications précédentes, dans lequel le contenant (10, 10') présente au moins partiellement une forme et/ou surface externe configurée pour former une zone de préhension circonférentielle (80).
